# EUROPÄISCHE PATENTSCHRIFT

(11) **EP 1 612 439 B1**
(45) Veröffentlichungstag und Bekanntmachung des Hinweises auf die Patenterteilung: **11.12.2013**
(21) Anmeldenummer: 05012613.5
(22) Anmeldetag: 13.06.2005
(51) Int. Cl.: F16D 13/38

(54) **Kupplungsscheibenanordnung für eine Mehrscheibenkupplung**
Pressure plate assembly for a multidisk coupling
Ensemble plateau de pression pour embrayage à disques multiples

(30) Priorität: 29.06.2004 DE 102004031338; 22.09.2004 DE 102004045795; 21.02.2005 DE 102005007798; 17.05.2005 DE 102005023354
(43) Veröffentlichungstag der Anmeldung: 04.01.2006
(73) Patentinhaber: ZF Friedrichshafen AG, 88046 Friedrichshafen (DE)
(72) Erfinder: Orlamünder, Andreas, 97422 Schweinfurt (DE); Müller, Thorsten, 97072 Würzburg (DE); Kühner, Michael, 97523 Schwanfeld (DE); Bokisch, Winfried, 97490 Maibach (DE); Vogt, Sebastian, 97616 Bad Neustadt (DE); Mensch, Waldemar, 97422 Schweinfurt (DE)

(56) Entgegenhaltungen:
- DE-A1- 10 024 088
- DE-A1- 10 209 555
- DE-A1- 19 849 623
- US-A- 6 070 708

## Beschreibung

Die Erfindung bezieht sich auf eine Kupplungsscheibenanordnung für eine als Mehrscheibenkupplung ausgeführte Reibungskupplung gemäß dem Oberbegriff von Patentanspruch 1

Eine derartige Kupplungsscheibenanordnung ist aus der DE 100 24 088 A1 bekannt; es wird auf die dortige Fig. 8 Bezug genommen. Bei der bekannten Kupplungsscheibenanordnung ist das zweite Trägerelement an dem ersten Trägerelement in Richtung Drehachse verlagerbar angeordnet, wobei eine Außenverzahnung des ersten Trägerelements mit einer Innenverzahnung des zweiten Trägerelements in Drehmitnahmeeingriff steht. Die beiden Trägerelemente sind jeweils topfartig ausgebildet, wobei ein jeweiliger Umfangswandungsbereich die Außenverzahnung des ersten Trägerelements und die Innenverzahnung des zweiten Trägerelements bilden. Diese sich in axialer Richtung erstreckende Umfangswandungsbereiche dienen zur axialen Überbrückung eines von einem axialen Mindestabstand der Reibbelageinheiten abhängigen axialen Abstands. Die bekannte Doppelkupplungsscheibe nimmt deswegen radial innerhalb der Reibbelageinheiten vergleichsweise viel radialen und axialen Bauraum ein, der entweder motorseitig oder getriebeseitig einkalkuliert werden muss, getriebeseitig auch in Bezug auf die Kupplungsbetätigung während eines Kuppelvorgangs, ggf. in Bezug auf das Eintauchen von Federzungen einer als Kraftspeicher dienenden Membranfeder.

Eine weitere derartige Kupplungsscheibenanordnung ist z.B. aus US 6 070 708 A bekannt.

Demgegenüber ist es eine Aufgabe der Erfindung eine Kupplungsscheibenanordnung der angesprochenen Art bereitzustellen, die aufgrund ihrer Konstruktion für eine optimale Ausnutzung des zur Verfügung stehenden Bauraums günstig ist.

Diese Aufgabe wird durch die Merkmale des Patentanspruchs 1 gelöst.

Da das zweite Element über die Torsionsschwingungsdämpferanordnung mit dem ersten Trägerelement verbunden oder verbindbar ist, kann die Torsionsschwingungsdämpferanordnung zumindest dabei mitwirken, den axialen Abstand zwischen den beiden Trägerelementen zu überbrücken, so dass eine entsprechende Ausdehnung eines oder beider Trägerelemente in axialer Richtung insoweit nicht mehr erforderlich ist. Es muss nur noch durch entsprechende Ausgestaltung wenigstens eines das zweite Trägerelement mit dem ersten Trägerelement verbindenden Elements bzw. des ersten oder/und zweiten Trägerelements selbst dafür gesorgt werden, dass die beiden Trägerelemente in Richtung der Drehachse relativ zueinander verlagerbar sind, unter Erhalt einer Drehmitnahmeverbindung.

Es wird vor allem daran gedacht, dass das zweite Trägerelement mit dem anderen der Deckscheibenelemente drehfest und bezüglich diesem im Wesentlichen in Richtung der Drehachse verlagerbar verbunden oder verbindbar ist. Betreffend das erste Trägerelement ist es bevorzugt, dass dieses von dem einen Deckscheibenelement selbst gebildet ist, und dass dieses Deckscheibenelement nahezu eben bzw. wenig gekröpft ausgeführt ist und vorzugsweise vergleichsweise dünn ausgeführt ist.

Weiterbildend wird vorgeschlagen, dass vom zweiten Trägerelement und dem anderen Deckscheibenelement oder einem damit fest verbundenen Zwischenträgerelement ein Element eine im Wesentlichen nach radial außen gerichtete erste Eingriffsformation, vorzugsweise Außenverzahnung, und das andere Element eine im Wesentlichen nach radial innen gerichtete zweite Eingriffsformation, vorzugsweise Innenverzahnung aufweist, welche mit der ersten Eingriffsformation in Drehmitnahmeeingriff steht oder bringbar ist. Die ersten und zweiten Eingriffsformationen ermöglichen die axiale Verlagerung des zweiten Trägerelements relativ zum ersten Trägerelement.

In diesem Zusammenhang ist es besonders vorteilhaft, wenn die beiden Eingriffsformationen, wie schon angesprochen, jeweils als Verzahnung (Außenverzahnung bzw. Innenverzahnung) ausgeführt sind, wobei von diesen Verzahnungen zumindest eine in Richtung der Drehachse langgestreckt ist. Dabei reicht aber eine solche Erstreckung der Verzahnung bzw. Verzahnungen in Richtung der Drehachse aus, die die im Betrieb auftretende relative axiale Verlagerung zwischen den beiden Trägerelementen unter sicherem Erhalt der Drehmitnahmeverbindung zulässt, unabhängig von dem axialen Abstand zwischen dem ersten Trägerelement bzw. dessen Reibbelageinheit und dem zweiten Trägerelement bzw. dessen Reibbelageinheit.

Vorteilhaft kann vom zweiten Trägerelement und dem anderen Deckscheibenelement bzw. dem damit fest verbundenen Zwischenträgerelement wenigstens ein Element im Wesentlichen topfartig ausgebildet sein, wobei ein Umfangswandungsbereichs dieses Elements die erste bzw. zweite Eingriffsformation (ggf. Außenverzahnung bzw. Innenverzahnung) aufweist. Gegenüber einer derartigen topfartigen Ausbildung beider Elemente ist es aber bevorzugt, dass nur eines von den beiden Elementen topfartig mit dem Umfangswandungsbereich ausgeführt ist, wohingegen das andere Element vorteilhaft von einem im Wesentlichen planen bzw. nahezu ebenen Scheibenteil gebildet sein kann.

Es wird insbesondere daran gedacht, dass das zweite Trägerelement von einem im Wesentlichen planen (bzw. nahezu ebenen) Ringscheibenteil gebildet ist, das vorzugsweise mit einer Innenverzahnung mit einer im Umfangswandungsbereich des Deckscheibenelements bzw. des Zwischenträgerelements ausgebildeten Außenverzahnung in Drehmitnahmeeingriff steht.

Die Erfindung wird im Folgenden anhand von in den Figuren gezeigten Ausführungsbeispielen näher erläutert.
- Fig. 1: ist eine Längsschnittansicht einer Ausführungsform einer erfindungsgemäßen Zweischeiben-Reibungskupplung.
- Fig. 2: ist eine weitere Längsschnittansicht der Zweischeiben-Reibungskupplung längs einer gegenüber der Schnittlinie der Fig. 1 winkelmäßig versetzten Schnittlinie.
- Fig. 3: ist eine Axialansicht der Reibungskupplung der Fig. 1 und 2.
- Fig. 4: ist eine weitere Ansicht auf die Zweischeibenkupplung.
- Fig. 5: ist eine vergrößerte Ansicht auf einen Umfangsbereich der Zweischeibenkupplung.
- Fig. 6: ist eine Längsschnittansicht eines Kupplungsgehäuse-Hauptteils, das mit einem als Widerlager dienenden Schwungrad ausgeführt ist.
- Fig. 7: zeigt in Teilfigur 7a eine axiale Ansicht auf Komponenten der Kupplungsscheibenanordnung, nämlich Kupplungsscheibennabe, Torsionsschwingungsdämpfer und eine an dem einen Deckblech des Torsionsschwingungsdämpfers angebrachte Reibbelagscheibe, und in Teilfigur 7b eine Längsschnittansicht durch diese Komponenten.
- Fig. 8: zeigt in Teilfigur 8a eine Axialansicht des anderen Deckblechs des Torsionsschwingungsdämpfers, in Teilfigur 8b eine Längsschnittansicht dieses Deckblechs längs Linie B-B und in Teilfigur 8c eine Teil-Längsschnittansicht durch dieses Deckblech längs Linie C-C in Figur 8a.
- Fig. 9: zeigt in Teilfigur 9a eine Axialansicht auf eine Mitnehmerscheibe samt der daran angebrachten anderen Reibbelagscheibe und in Teilfigur 9b eine Längsschnittansicht dieser Komponenten.
- Fig. 10: zeigt in Teilfigur 10a eine Axialansicht nur der Mitnehmerscheibe und in Teilfigur 10b eine Teil-Längsschnittansicht dieser Komponente.
- Fig. 11: ist eine Längsschnittansicht einer weiteren Ausführungsform einer erfindungsgemäßen Zweischeiben-Reibungskupplung.
- Fig.12: ist eine weitere Längsschnittansicht der Zweischeiben-Reibungskupplung gemäß Fig. 12 längs einer gegenüber der Schnittlinie der Fig. 11 winkelmäßig versetzten Schnittlinie.
- Fig. 13: ist eine Axialansicht der Reibungskupplung der Fig. 11 und 12.
- Fig. 14: ist eine weitere Ansicht auf die Zweischeibenkupplung der Fig. 11 bis 13.
- Fig.15: ist eine vergrößerte Ansicht auf einen Umfangsbereich der Zweischeibenkupplung der Fig. 11 bis 14.
- Fig.16: ist eine weniger stark vergrößerte Ansicht auf einen Umfangsbereich der Zweischeibenkupplung der Fig. 11 bis 15.
- Fig. 17: zeigt in Teilfigur 17a eine Längsschnittansicht eines als Widerlager dienenden Schwungrads, an dem die Ausführungsform der Fig. 11 bis 16 montierbar sein könnte, und in Teilfigur 17b eine weitere Ausführungsform einer erfindungsgemäßen Zweischeiben-Reibungskupplung, die als Ausführungsvariante gegenüber der Ausführungsform der Fig. 11 bis 16 anzusehen ist und an der Widerlageranordnung gemäß Teilfigur 17a montierbar sein könnte.
- Fig. 18: ist ein vergrößerte Ansicht auf einen Umfangsbereich der Zweischeibenkupplung der Teilfigur 17b.
- Fig. 19: zeigt in einer Darstellung entsprechend Fig. 18 eine Abwandlung der Zweischeibenkupplung gemäß Fig. 18.
- Fig. 20: zeigt in einer Darstellung entsprechend Fig. 18 eine weitere Abwandlung der Zweischeibenkupplung gemäß Fig. 18.
- Fig. 21: zeigt in Teilfigur 21a) eine Ansicht auf einen Umfangsbereich eines weiteren Ausführungsbeispiels einer Zweischeibenkupplung und in Teilfigur 21b) eine vergrößerte Ansicht auf den Umfangsbereich der Zweischeibenkupplung.
- Fig. 22: zeigt in Teilfigur 22a) eine Ansicht auf einen Umfangsbereich noch eines weiteren Ausführungsbeispiels einer Zweischeibenkupplung und in Teilfigur 22 b) eine vergrößerte Ansicht auf den Umfangsbereich der Zweischeibenkupplung.

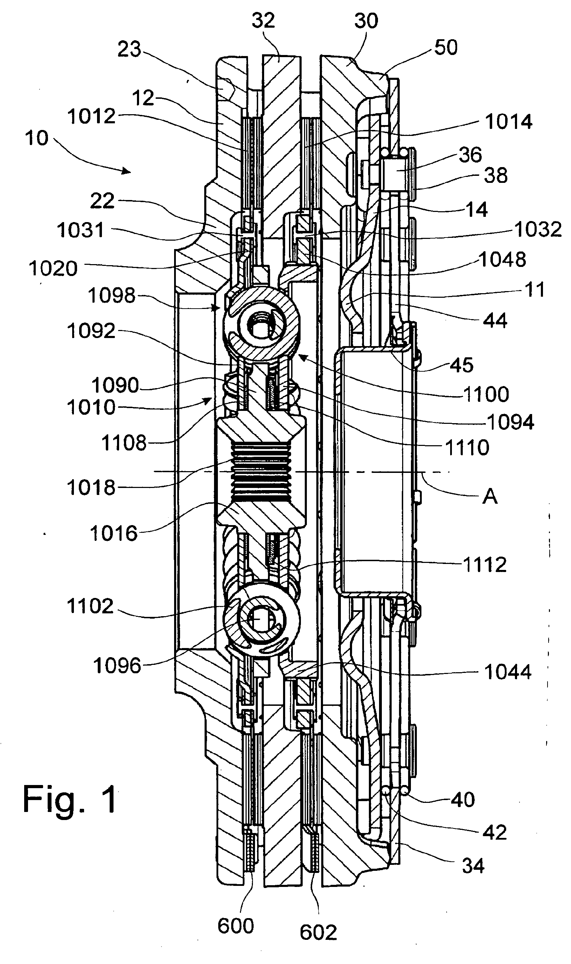

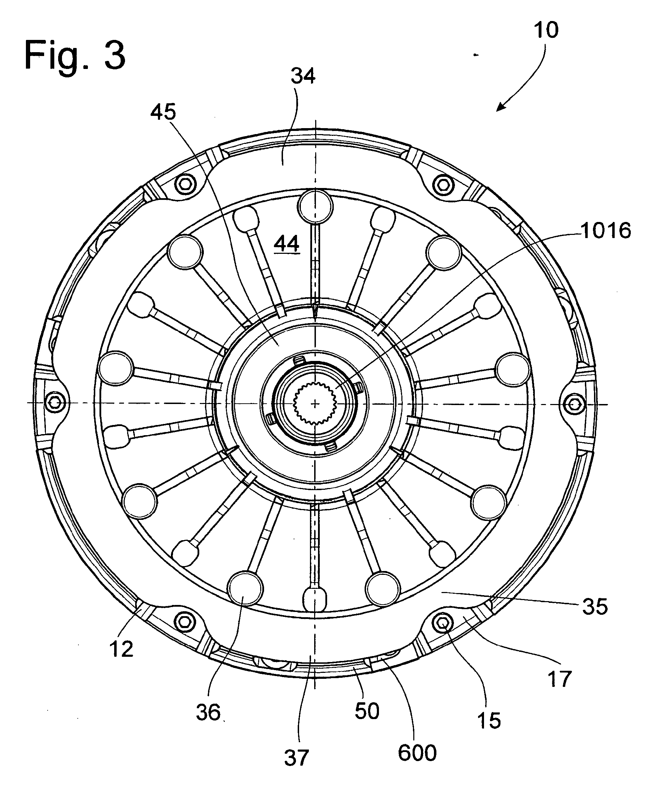

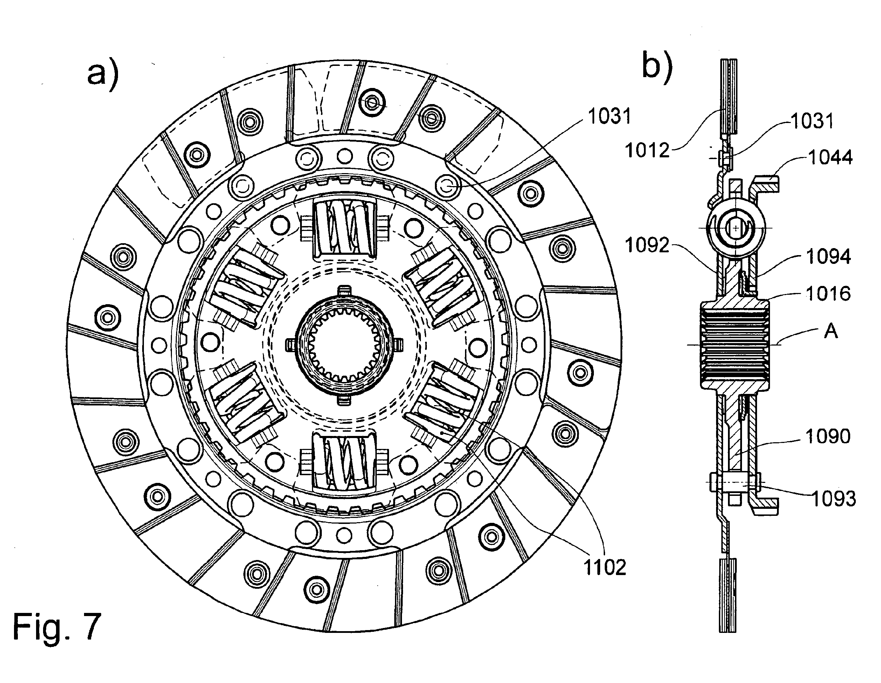

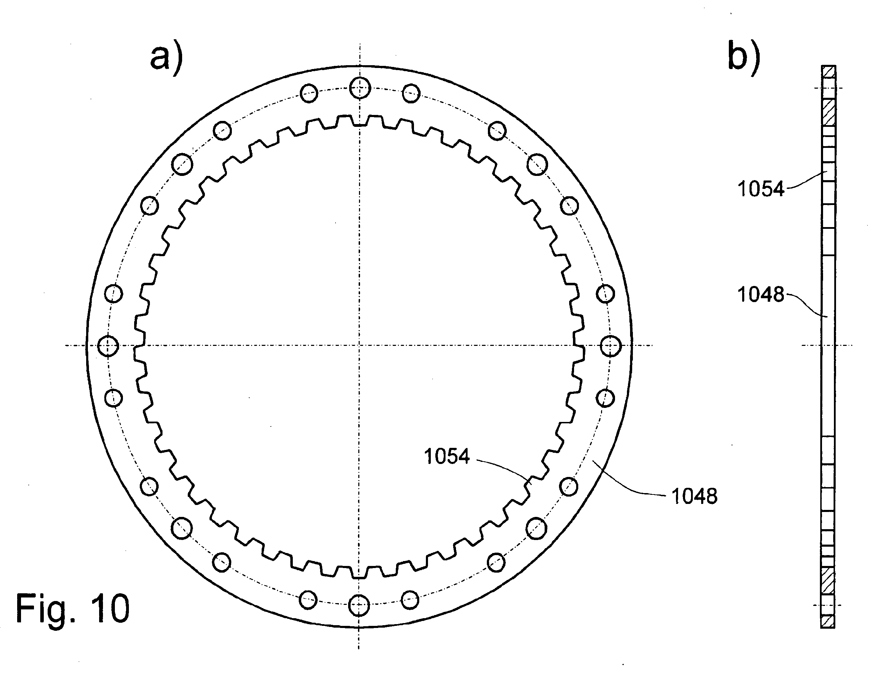

Die Figuren 1 bis 5 zeigen ein Ausführungsbeispiel einer Mehrscheibenkupplung als Ganzes, mit ihrer eine Zwischenplatte und eine Anpressplatte aufweisenden Plattenanordnung, mit der gesamten Druckplattenbaugruppe, die die Plattenanordnung und ein als Widerlager dienendes Schwungrad, das Teil eines Kupplungsgehäuses ist, aufweist, sowie mit einer Zweischeiben-Kupplungsscheibenanordnung. Die Kupplungsscheibenanordnung selbst ist in den Fig. 7 bis 10 im Detail gezeigt.

Der Aufbau und die Funktionsweise der Reibungskupplung, speziell ihrer Druckplattenbaugruppe, lässt sich besonders einfach auf Grundlage des Inhalts der Offenlegungsschrift DE 100 25 533 A1 verstehen, der deswegen durch Bezugnahme in die Offenbarung der vorliegenden Anmeldung einbezogen wird. Es werden in den folgenden Erläuterungen und in den Figuren für die Zweischeibenkupplung mit Ausnahme der eigentlichen Kupplungsscheibenanordnung die gleichen Bezugszeichen für analoge, identische und einander entsprechende Komponenten und Elemente wie in der DE 100 25 533 A1 verwendet.

Der Aufbau und die Funktionsweise der Kupplungsscheibenanordnung lässt sich besonders einfach auf Grundlage des Inhalts der Offenlegungsschrift DE 100 24 088 A1 verstehen, der deswegen durch Bezugnahme in die Offenbarung der vorliegenden Anmeldung einbezogen wird. Es werden betreffend die Kupplungsscheibenanordnung für identische, analoge und entsprechende Komponenten und Elemente die gleichen Bezugszeichen wie in der DE 100 24 088 A1 verwendet, jeweils um 1000 erhöht.

Aus der DE 100 25 533 A1 und der DE 100 24 088 A1 ergeben sich im Übrigen mögliche Ausgestattungsvarianten erfindungsgemäßer Reibungskupplungen, Druckplattenbaugruppen und Kupplungsscheibenanordnungen.

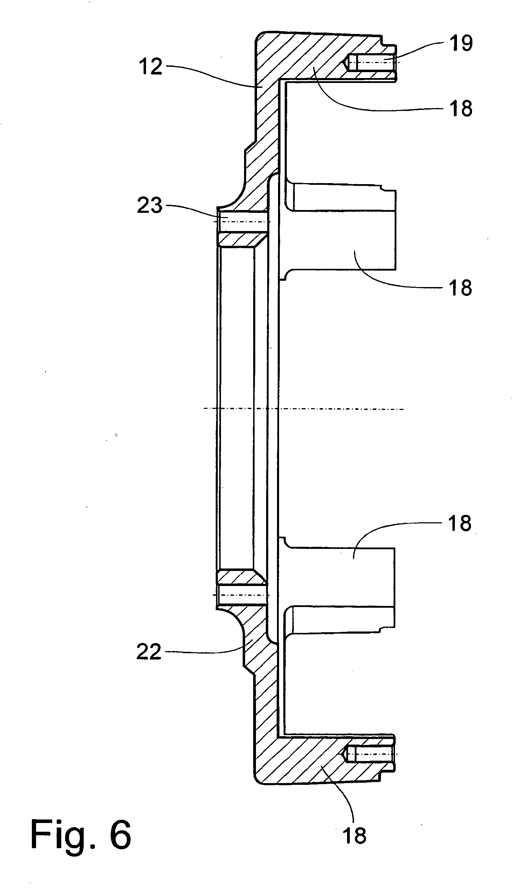

In den Figuren ist die als Beispiel gezeigte Reibungskupplung allgemein mit 10 bezeichnet. Wie erkennbar, ist die Reibungskupplung als Mehrscheibenkupplung, nämlich als Zweischeibenkupplung, ausgebildet und umfasst ein Kupplungsgehäuse 12. Wesentlicher Bestandteil des Kupplungsgehäuses ist ein Schwungrad 22, das dafür ausgebildet ist, an einer Motorabtriebswelle angeschraubt zu werden, entweder direkt an der Motorabtriebswelle oder vermittels einer zwischen Motorabtriebswelle und Kupplung vorgesehenen Momentübertragungsanordnung, beispielsweise umfassend eine Flexplatte oder/und einen Torsionsschwingungsdämpfer oder ein Zwei-Massen-Schwungrad. Entsprechende Schrauböffnungen sind in Fig. 6 mit 23 bezeichnet. Das Schwungrad 22 ist mit einteilig daran vorgesehenen stegartigen Stützabschnitten 18 ausgeführt, an denen ein Gehäusedeckel 14 vermittels Schrauben 15 angeschraubt ist. Die Schrauben sind in Schrauböffnungen 19 der im Folgenden als Gehäusestege bezeichneten Stützabschnitte 18 eingeschraubt. Der Deckel 14 trägt eine als Kraftspeicher dienende Membranfeder 34, die durch Niete 36 fest an dem Deckel 14 angebracht ist. Zwischen dem Deckel 14 und der Membranfeder 34 und zwischen der Membranfeder 34 und einem Haltekopf 38 der Niete ist knapp radial außerhalb der Niete ein jeweiliger Stützring 42 bzw. 40 angeordnet, der die Membranfeder 34 einerseits am Deckel 14 und andererseits an den Köpfen 38 der Niete 36 linienartig abstützt und insoweit ein Verschwenken der Federzungen 44 für ein Ausrücken der Reibungskupplung ermöglicht. Die Federzungen 44 ragen nach radial einwärts und sind dort durch einen bis auf einen Ausrückring 45 nicht dargestellten Ausrückmechanismus beaufschlagbar.

In dem Gehäuse 12 ist in dem zwischen dem Schwungrad 22 und dem Deckel 14 gebildeten Volumenbereich eine von einer Anpressplatte 30 und einer Zwischenplatte 32 gebildete Plattenanordnung angeordnet. Zwischen der Anpressplatte 30 und der Zwischenplatte 32 befindet sich eine Reibbelageinheit 1014 und zwischen der Zwischenplatte 32 und dem als Widerlagerplatte dienenden Schwungrad 22 befindet sich eine Reibbelageinheit 1012 einer Kupplungsscheibenanordnung 1010, die mit einem Torsionsschwingungsdämpfer 1106 ausgeführt ist, der zwischen den Reibbelageinheiten und einer Kupplungsnabe 1016 wirkt. Wie im Folgenden anhand der Fig. 7 bis 10 noch näher ausgeführt, ist die zwischen dem Schwungrad 22 und der Zwischenplatte 32 angeordnete Reibbelageinheit 1012 an dem einen Deckblech 1098 des Torsionsschwingungsdämpfers angebracht, wohingegen die Reibbelageinheit 1014 vermittels eines Mitnehmerrings 1048 an einer Außenverzahnung des anderen Deckblechs 1094 des Torsionsschwingungsdämpfers in axialer Richtung verschiebbar drehmomentübertragend geführt ist.

Die Deckbleche zusammen mit dem Mitnehmerring 1048 dienen als Trägeranordnung für die Reibbelageinheiten. In Fig. 1 bezeichnet 1020 einen als Trägerelement für die Reibbelageinheit 1012 dienenden Abschnitt des Deckblechs 1098.

Die Membranfeder 34 beaufschlagt die Anpressplatte 30 derart, dass sie in Richtung zum Schwungrad 22 zu gepresst ist. Die Reibbelageinheiten sind dann zwischen der Anpressplatte 30 und der Zwischenplatte 32 bzw. zwischen der Zwischenplatte 32 und dem Schwungrad 22 eingespannt, die Kupplung ist dann eingerückt. Durch Betätigung der Federzungen 44 vermittels des Ausrückrings 45 im Sinne einer Verlagerung in Richtung zum Schwungrad kann die kraftmäßige Beaufschlagung der Anpressplatte 30 zum teilweisen oder vollständigen Ausrücken der Kupplung zumindest teilweise aufgehoben werden. Die Anpressplatte 30 und die Zwischenplatte 32 einerseits und die Zwischenplatte 32 und das Schwungrad 22 andererseits werden dann durch eine noch näher zu erläuternde Lüftfederanordnung auseinander gedrückt, so dass der Reibeingriff der Plattenanordnung und des Schwungrads mit den Reibbelageinheiten dann entsprechend aufgehoben und die Reibungskupplung entsprechend ausgerückt wird. Dieses Ausrücken geht einher mit einer entsprechenden axialen Verschiebung der Reibbelageinheit 1014, die durch die sich unter der Rückstellkraft der Lüftfederanordnung in Richtung zum Deckel 34 verstellende Zwischenplatte 32 weggedrückt wird.

Die Membranfeder 34 steht unmittelbar mit Abstützrippen 50 der Anpressplatte 30 in Eingriff, und zwar an von einem Ringabschnitt 35 der Membranfeder 34 in einem zwischen zwei Gehäusestegen 18 gelegenen Umfangswinkelbereich vorstehenden Membranfederlappen 37, die als Gegen-Hebelarm zu mehreren im Umfangswinkelbereich gelegenen, als Hebelarme auffassbaren Federzungen 44 aufgefasst werden können. Die Abstützrippen oder Abstützvorsprünge 50 der Anpressplatte 30 können gegenüber einer Erstreckung in Tangentialrichtung zum Umfang gekippt sein, um für Kühlungszwecke in der Art von Turbinenschaufeln bei der Drehung der Kupplung einen Luftaustausch zu fördern.

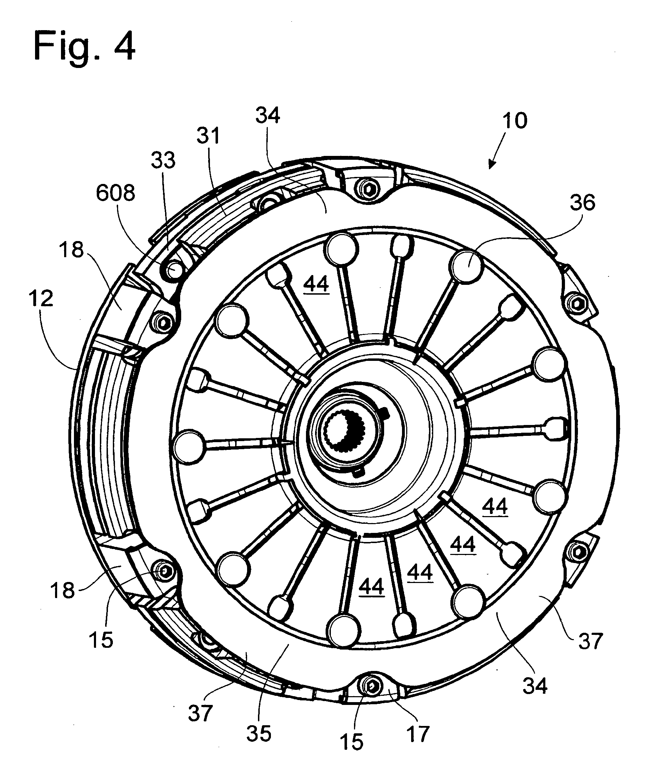

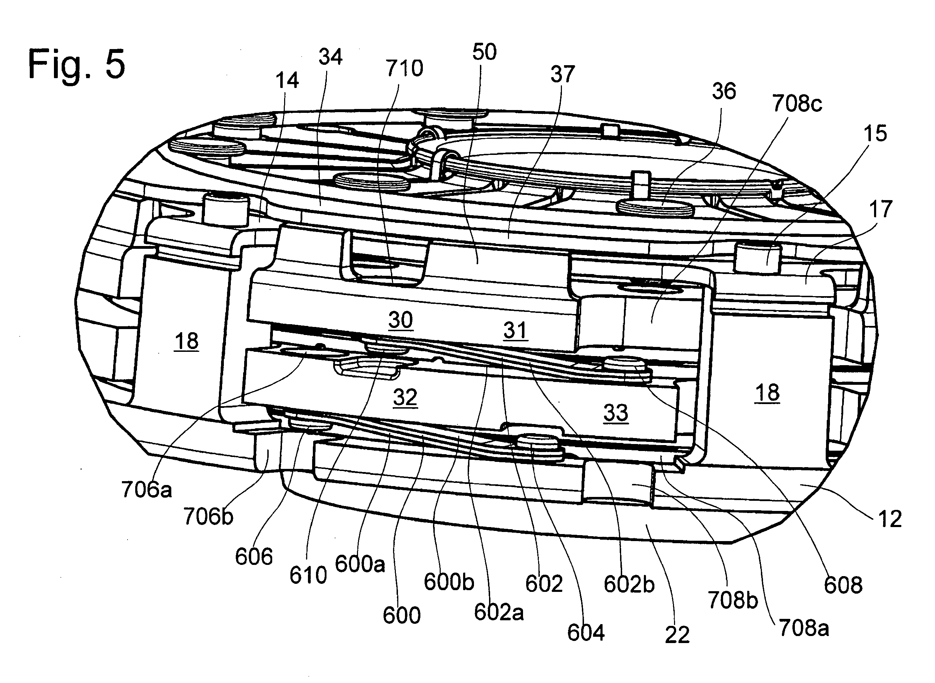

Wie insbesondere in Fig. 4 und Fig. 5 erkennbar, weist der Deckel radial vorstehende Haltelappen 17 auf, die über die Schrauben 15 mit den Gehäusestegen 18 verschraubt sind. Im Umfangswinkelbereich zwischen den Gehäusestegen steht die Membranfeder 34 an ihren Federlappen 37 mit den Abstützrippen 50 sich radial mit den Gehäusestegen 18 und den Deckelhaltelappen 17 überdeckend in Eingriff. Ein gegebener radialer Bauraum ist so optimal ausgenutzt. Der Eingriff zwischen der Membranfeder und der Anpressplatte findet nämlich radial außerhalb der Reibbelageinheiten in einem ohnehin für die Halterung des Deckels benötigten radialen Bauraum statt. Da die Befestigungsschrauben 15 zwischen den Membranfederlappen 37 zugänglich sind, kann überdies der Deckel mit daran vormontierter Membranfeder mit den Gehäusestegen 18 verschraubt werden.

Die zwischen dem Gehäuse 12 und der Plattenanordnung 30, 32 wirkende Lüftfederanordnung ist in Fig. 5 in Teilen erkennbar, ergänzend wird auch auf die Fig. 1, 3 und 4 verwiesen. Zwischen jeweiligen Paaren der Gehäusestege 18 sind sechs Aussparungs-Winkelbereiche gebildet, in die ein jeweiliger Plattenabschnitt 31 der Anpressplatte 30 und ein jeweiliger Plattenabschnitt 33 der Zwischenplatte 32 radial vorsteht. Die vorstehenden Abschnitte 31 der Anpressplatte 30 sind mit den Abstützrippen 50 ausgeführt. In Umfangsrichtung ist jeder zweite der zwischen den Gehäusestegen 18 definierten Winkel-Aussparungsbereiche mit zwischen dem Gehäuse und den radial vorstehenden Abschnitten 33 der Zwischenplatte 32 und mit zwischen diesen radial vorstehenden Abschnitten 33 und den radial vorstehenden Abschnitten 31 der Anpressplatte 30 wirkenden Lüftfedern in Form von Tangentialblattfedern 600 und 602 ausgeführt, die einerseits mit einem die Gehäusestege 18 aufweisenden Bereich des Schwungrads 22 und andererseits mit dem jeweiligen radial vorstehenden Abschnitt 33 der Zwischenplatte 32 bzw. einerseits mit dem jeweiligen radial vorstehenden Abschnitt 33 der Zwischenplatte 32 und andererseits mit dem jeweiligen radial vorstehenden Abschnitt 31 der Anpressplatte 20 vernietet sind. Die betreffenden Niete sind in Fig. 5 mit 604, 606, 608 und 610 bezeichnet. Um die Niete 606, 608 und 610 setzen und damit die betreffenden Tangentialblattfedern durch Vernieten anbringen zu können, sind Aussparungen bzw. Öffnungen 706a, 706b der Druckplatte bzw. im radial vorstehenden Abschnitt 33 der Zwischenplatte 32 für die Niete 606, entsprechende Aussparungen bzw. Öffnungen 708a bzw. 708b bzw. 708c im Schwungrad 22 bzw. im radial vorstehenden Abschnitt 33 der Zwischenplatte 32 bzw. zwischen dem radial vorstehenden Abschnitt 31 der Anpressplatte 30 und dem benachbarten Gehäusesteg 18 für den Niet 608 und eine die Abstützrippe 50 unterbrechende Aussparung bzw. Öffnung 710 im radial vorstehenden Abschnitt 31 der Anpressplatte 30 vorgesehen. Durch diese Aussparung bzw. Öffnungen sind die Vernietungsstellen für die Zuführung eines jeweiligen Niets und das Vernieten mittels geeigneter Vemietungswerkzeuge zugänglich. Es sei angemerkt, dass betreffend die Abstützrippe 50 die Anordnung so ist, dass die linienmäßige Abstützung des jeweiligen Membranfederlappens 37 in Umfangsrichtung nur jeweils sehr kurz unterbrochen ist. Die für die Vernietung erforderlichen Unterbrechungen durch die Öffnungen bzw. Aussparungen 710 und 708c sind so gewählt, dass diese Abstützung durch die Abstützrippe 50 nur jeweils kurz unterbrochen ist, wobei mehreren jeweils entsprechend kurzen Unterbrechungen gegenüber einer längeren Unterbrechung der Vorzug gegeben ist.

Die Lüftfederanordnung umfasst also drei in gleichmäßigen Winkelabständen um den Umfang verteilte Tangentialblattfedersegmente in Zuordnung zur Anpressplatte 30 und zur Zwischenplatte 32 sowie drei in gleichmäßigen Winkelabständen um den Umfang verteilte Tangentialblattfedersegmente in Zuordnung zur Zwischenplatte 32 und zum Gehäuse. Die Tangentialblattfedersegmente können, wie in Fig. 5 zu erkennen, mehrschichtig ausgeführt sein, im vorliegenden Beispielsfall jeweils mit zwei unmittelbar aufeinander liegenden Tangentialblattfedern 600a und 600b bzw. 602a und 602b.

Die Tangentialblattfedersegmente dienen nicht nur als reine Lüftfedem, sondern auch zur Übertragung des Motormoments vom Schwungrad auf die Plattenanordnung. Die Gehäusestege 18 haben dementsprechend keine Momentübertragungsfunktion und können entsprechend schmal in Umfangs-und Radialrichtung ausgeführt sein. Da die Anpressplatte 30 über die Zwischenplatte 32 mit dem Schwungrad 22 in Momentübertragungsverbindung steht, nämlich über die Tangentialblattfedern 602 und dann über die Tangentialblattfedern 600, sind in einem jeweiligen von zwei Gehäusestegen 18 definierten Aussparungs-Winkelbereich jeweils sowohl die Tangentialblattfedern 600 als auch die Tangentialblattfedern 602 angeordnet, so dass das zur Anpressplatte zu übertragende Moment von diesem Moment empfangenden Zwischenplattenabschnitt 33 über die Tangentialblattfedern 602 unmittelbar auf den benachbarten Anpressplattenabschnitt 31 übertragen werden kann, also kein Momentenfluss durch die Zwischenplatte zu einem anderen radial vorstehenden Abschnitt 33 erfolgen muss.

Die Tangentialblattfedern sind derart ausgeführt, dass gleiche Tangentialblattfederkennlinien in Axialrichtung zwischen der Zwischenplatte 32 und der Anpressplatte 30 und zwischen der Zwischenplatte 32 und dem Schwungrad 22 maßgeblich sind. Vorzugsweise werden identische Tangentialblattfedern verwendet, so dass die Teilevielfalt reduziert ist. Während eines Aus- und Einkuppelvorgangs wird durch die gleichen Federkennlinien sichergestellt, dass in Bezug auf das Schwungrad, die Zwischenplatte und die Anpressplatte sowie die dazwischen angeordneten Reibbelageinheiten die gleichen Trennkräfte und Trennwege auftreten und in Bezug auf beide Reibbelageinheiten ein zeitgleiches Ein- und Auskuppeln erfolgt und insgesamt der Kuppelvorgang zeitlich vergleichsweise kurz gehalten wird. Eine nacheinander bzw. aufeinander folgende Kuppelreihenfolge würde nämlich zu einem ungewünschten Schleppmoment während des Ein- und Auskuppelvorgangs, insbesondere zu Beginn des Ein-und Auskuppelvorgangs führen, ggf. zu einem zweistufigen Ein- und Auskuppeln, was normalerweise unerwünscht ist.

Der Mofnentenfluss über das Schwungrad auf die Platten der Plattenanordnung gestaltet sich bei gleichen wirksamen Reibwerten und Reibflächen derart, dass über die schwungradseitigen Tangentialblattfedern 600 75% des Motormoments übertragen werden, und dass über die anpressplattenseitigen Tangentialblattfedern 602 25% des Motormoments übertragen werden. Hierbei ist vorausgesetzt, dass über jede axiale Reibfläche 25% des Motormoments übertragen werden. 25% des Motormoments werden dementsprechend direkt vom Schwungrad 22 auf die Reibbelageinheit 1012 übertragen. 50% des Motormoments werden von der Zwischenplatte 32 zum einen auf die Reibbelageinheit 1012 und zum anderen auf die Reibbelageinheit 1014 übertragen. Die restlichen 25% des Motormoments werden von der Anpressplatte 30 auf die Reibbelageiheit 1014 übertragen. Die von der Zwischenplatte 32 und der Anpressplatte 30 auf die beiden Reibbelageinheiten 1012 und 1014 zu übertragenden Momentanteile machen also 75% des Gesamtmoments aus und müssen über die Tangentialblattfedern 600 vom Schwungrad 22 auf die Zwischenplatte 32 übertragen werden. Ein Drittel hiervon, nämlich 25% des Gesamtmoments, müssen dann von den Tangentialblattfedern 602 zur Anpressplatte 30 übertragen werden. Obwohl die Tangentialblattfedern 602 weniger Moment übertragen müssen als die Tangentialblattfedern 600, ist es bevorzugt, identische Tangentialblattfedern zu verwenden, aus den genannten Gründen.

Es sei angemerkt, dass im Prinzip auch andere Federanordnungen als momentenübertragende Lüftfederanordnungen in Betracht kommen. Ein Vorteil der Tangentialblattfedern ist, dass diese eine sehr genaue und drehzahlunabhängige Zentrierung der Anpressplatte 30 und der Zwischenplatte 32 relativ zum Gehäuse, speziell dem Schwungrad 22, ermöglichen, insbesondere eine Zentrierung zur Vermeidung einer radialen Unwucht. Überdies kann mit guter Genauigkeit eine gewünschte Zentrierung oder Soll-Positionierung der radial vorstehenden Abschnitte 31 und 32 der Platten zwischen den Gehäusestegen 18 erfolgen. Bei Drehung der Kupplung auf die Lüftfedern wirkende Fliehkräfte werden durch die mit ihren Schmalkanten nach radial außen weisenden Lüftfedern gut und ohne wesentliche Beeinflussung ihrer Federeigenschaften aufgenommen: Dass eine Axialbewegung der Zwischenplatte und der Anpressplatte im Zuge eines Ein- und Auskuppelns von einer leichten relativen Verdrehung zueinander und zum Gehäuse 18 begleitet ist, bereitet keine Probleme und ist nur bei der Dimensionierung der lappenartigen Plattenabschnitten 31 bezogen auf ihre Ausdehnung in Umfangsrichtung und ihre winkelmäßige Positionierung in einem jeweiligen Winkel-Aussparungsbereich abgemessen zu berücksichtigen.

Betreffend den Zusammenbau einer entsprechenden Reibungskupplung, ggf. zur Bereitstellung als in einen Kraftfahrzeug-Antriebsstrang einzugliederndes Einbau-Modul, wird im Falle einer Vernietung der Lüftfedern mit dem Gehäuse bzw. den Platten entsprechend dem vorliegenden Ausführungsbeispiel eine in einer bestimmten Weise gestufte Vemietungsreihenfolge als zweckmäßig erachtet, die mit dem Einlegen der Kupplungsscheibenanordnung bzw. der Reibbelageinheiten zeitlich abgestimmt ineinandergreift. Es wird speziell vorgeschlagen, zuerst die schwungradseitigen Tangentialblattfedern 600 vermittels der Niete 604 am Schwungrad 22 anzubringen. Zeitgleich, vorausgehend oder danach werden ferner die Tangentialblattfedern 602 vermittels der Niete 610 an der Anpressplatte 30 angebracht. Nach diesen Vorbereitungen wird nun die schwungradseitige Kupplungsscheibe mit der Reibbelageinheit 1012, dem Torsionsschwingungsdämpfer 1106 und der Kupplungsscheibennabe 1016 in das Gehäuse eingelegt. Daraufhin wird die Zwischenplatte 32 eingesetzt und mit den schon angebrachten Tangentialblattfedern 600 mittels der Niete 606 vernietet. Die Verbindung zwischen dem Schwungrad 22 und der Zwischenplatte 32 ist nun vermittels der Nietbolzen 604 und 606 und der Tangentialblattfedern 600 fest und ohne Auftrennen der Nietverbindungen unlösbar ausgeführt. Anschließend wird die andere Reibbelageinheit 1014 mit ihrem Mitnahmering auf die getriebeseitige Reibfläche der Zwischenplatte 32 aufgelegt, unter Herstellung der Drehmitnahmeverbindung zwischen dem Mitnahmering und dem getriebeseitigen Deckblech des Torsionsschwingungsdämpfer 1106. Anschließend wird die Anpressplatte 30 eingeführt, die schon mit den Tangentialblattfedern 602 bestückt ist. Nun werden die Tangentialblattfedern 602 vermittels der Niete 608 mit der Zwischenplatte 32 vernietet, wodurch nun die Zwischenplatte 32 und die Anpressplatte 30 fest und ohne Lösen der Nietverbindung unlösbar miteinander und damit die Anpressplatte 30 auch mit dem Schwungrad 22 verbunden ist.

Zur jeweiligen Vernietung mittels eines Vemietwerkzeugs und zum Setzen der Niete weisen das Schwungrad 22 und die Zwischenplatte 32 und Anpressplatte 30 jeweilige Aussparungen bzw. Öffnungen in axialer Überdeckung mit dem jeweiligen Nietbolzen auf, durch welche der jeweilige Nietbolzen zugeführt wird und das verwendete Vemietwerkzeug zum Einwirken auf den Nietbolzen eingreifen kann. Die Öffnungen bzw. Aussparungen können in Form von Ausfräsungen ausgeführt sein.

Die Aussparungen im Schwungrad und in der Anpressplatte sind speziell derart geformt, dass das Vemietwerkzeug, beispielsweise ein Bolzen, sich von der kupplungsabgewandten Seite des Schwungrads durch dieses hindurch bzw. an diesem vorbei erstrecken kann, um mit dem Nietbolzen 606 bzw. dem anderen Ende des Nietbolzens 608 zusammenzuwirken. Beim Ausführungsbeispiel sind hierfür in der Anpressplatte und im Schwungrad nach radial außen offene Aussparungen 706b, 708b und 708c vorgesehen. Zur Vernietung der Zwischenplatte 32 mit dem Schwungrad 22 reicht in Bezug auf die Niete 606 die sich in axialer Richtung erstreckende, nicht nach radial außen offene Ausnehmung 706a, die gerade so groß ist, dass am zum Nietkopf 606 entgegengesetzten Ende der Niete 606 das Vernietwerkzeug angreifen kann. Diese Ausnehmung ist dann durch den Plattenlappen 31 der Anpressplatte 30 axial überdeckt.

Nach dem Anordnen der Platten 32 und 30 im Gehäuse und Durchführung der Vemietungen kann als nächstes der Gehäusedeckel auf die Gehäusestege 18 aufgelegt und an den Deckellappen 17 vermittels der Schrauben 15 mit den Gehäusestegen 18 verschraubt werden. Vorzugsweise weist hierbei der Gehäusedeckel 14 schon die daran festgenietete Membranfeder 34 auf. Die Membranfeder ist dabei vorzugsweise durchgedrückt, befindet sich also in einem einem ausgekuppelten Zustand entsprechenden Zustand. Dies hat den Vorteil, dass eine kraftfreie und spannungsfreie Verbindung zwischen dem Gehäusedeckel 14 und den Gehäusestegen 18 des Schwungrads 22 erfolgen kann, da sich in diesem Zustand die Membranfeder nicht oder nur geringfügig auf den Rippen 50 der Anpressplatte 30 abstützt bzw. an diesen Rippen erst im letzten Abschnitt des Verschraubens mit den Gehäusestegen 18 zum Anliegen kommt. Im Falle einer Auslegung für eine NORMALERWEISE-GESCHLOSSEN-Kupplung, bei der die Membranfeder von sich aus einen einem eingekuppelten Zustand entsprechenden Federzustand einnimmt, kann die Membranfeder für die Montage des Gehäusedeckels mittels eines die Membranfederzungen in Richtung zum Gehäusedeckel auslenkenden Hilfswerkzeugs in dem dem ausgekuppelten Zustand entsprechenden Federzustand gehalten werden.

Es sei angemerkt, dass es durchaus auch in Betracht kommt, nicht eine Verschraubung des Gehäusedeckels 14 mit dem restlichen Gehäuse, speziell den Gehäusestegen 18 vorzusehen, sondern eine andere Fügeverbindung. In Betracht kommt insbesondere auch eine Nietverbindung. Dies ist insbesondere deswegen eine sinnvolle Variante, wenn - wie beim hier beschriebenen Ausführungsbeispiel - die Zweischeibenkupplung vom Hersteller als im zusammengebauten Zustand ausgelieferte Modulkupplung, also als nur noch in einen Antriebsstrang einzugliederndes Einbaumodul, bereitgestellt wird und aufgrund der Vernietung der Tangentialblattfedern ohnehin nur unter Zerstörung dieser Vernietung auseinander gebaut werden kann.

Im Folgenden werden einige teilweise schon angesprochene Besonderheiten des Ausführungsbeispiels und weitere Einzelheiten des Ausführungsbeispiels weiter erläutert bzw. zusammenfassend dargestellt:
- Durch Konzentration beider Blattfederverbindungen auf einen jeweiligen Winkel-Aussparungsbereich, also zwischen übereinander liegenden Lappen-Vorsprüngen der Anpressplatte und der Zwischenplatte, muss das Moment, welches über die Zwischenplatte zur Anpressplatte zu übertragen ist, nicht durch die Zwischenplatte hindurch zu einem anderen Lappenvorsprung geleitet werden, sondern kann direkt von diesem Lappenvorsprung zum axial benachbarten Lappenvorsprung der Anpressplatte weitergeleitet werden. Es werden so ungünstige Spannungserhöhungen im Bereich der den jeweiligen Gehäusesteg 18 aufnehmenden, von zwei in Umfangsrichtung benachbarten Lappenvorsprüngen 33 begrenzten Aussparungen der Zwischenplatte vermieden.
- Durch diese Konzentration beider Blattfederverbindungen innerhalb eines jeweiligen von zwei Gehäusestegen begrenzten Aussparungs-Winkelbereichs wird überdies dafür gesorgt, dass die Anzahl von Ausnehmungen bzw. Öffnungen für das Vemietwerkzeug bzw. die Vemietwerkzeuge auf möglichst wenig Bereiche zwischen den Gehäusestegen begrenzt ist. Sind wie beim Ausführungsbeispiel 6 Gehäusestege 18 und damit sechs Gehäuseaussparungen vorgesehen und sind die Zwischenplatte und die Anpressplatte jeweils mittels drei Tangentialblattfederanordnungen angebunden, so ist nur jede zweite Gehäuseaussparung mit den Tangentialblattfedern bestückt und dementsprechend das Schwungrad nun in jedem zweiten Gehäuseaussparungsbereich mit den Aussparungen 606b und 708b ausgeführt. Hierdurch wird das Schwungrad vergleichsweise steif gehalten und es werden insbesondere Spannungskonzentrationen bzw. Spannungsspitzen durch Aussparungen beidseits eines jeweiligen Gehäusestegs vermieden. Das Gehäuse mit Schwungrad 22 und den Gehäusestegen 18 wird damit insgesamt steif gehalten und es wird eine vergleichsweise große Berstdrehzahl erreicht.
- Die vorgeschlagene Vernietreihenfolge der Tangentialblattfedern ergibt bezogen auf den zwischen den Gehäusestegen 18 vorhandenen Bauraum in Umfangsrichtung eine maximal mögliche Auflagefläche oder maximal lange Auflagekante für die Membranfeder an den auch als Anpressplattenschneide bezeichenbaren Rippen 50. Wie angesprochen, weist die Rippe im Bereich der Tangentialblattfedervemietung zur Vernietung der der Anpressplatte 30 selbst zugeordneten Tangentialblattfedern 602 zwei ausgesparte Bereiche auf, von denen einer die Abstützrippe 50 unterbricht und der andere als entsprechend in Umfangsrichtung vergrößerte, den benachbarten Gehäusesteg 18 aufnehmende Aussparung ausgeführt ist. Insgesamt wird der Bereich, an dem keine Abstützung durch die Rippe 50 für die Membranfeder erfolgt, vergleichsweise klein gehalten.
- Die nockenartigen Vorsprünge 33 und 31 der Zwischenplatte 32 und der Anpressplatte 30 ermöglichen eine sehr gute Wärmeabfuhr von der Zwischenplatte und der Anpressplatte. Deswegen weisen die Anpressplatte und die Zwischenplatte auch in den anderen Winkel-Aussparungen zwischen den Gehäusestegen 18, in denen keine Tangentialblattfedern vorgesehen sind, die Plattenlappen 33 und 31 auf. Die nach radial außen weisenden Flächenbereiche beider Platten können direkt mit in der Umgebung, beispielsweise in der Kupplungsglocke auftretenden Luftströmen in Wärmeaustauschkontakt treten und die Wärme aus den Ein- und Auskoppelvorgängen abführen. Die Gehäuselappen 33 und 31 sind also zwischen allen Gehäusestegen 18 möglichst großflächig ausgeführt, um eine möglichst gute Wärmeabfuhr von beiden Platten zu erreichen. Dies sorgt für eine besonders effektive Kühlung der Zwischenplatte und der Anpressplatte. Man braucht dann die Anpressplatte und die Zwischenplatte nicht mit so großer Wärmekapazität ausführen, beispielsweise so, dass diese Platten vergleichsweise weniger axialen Bauraum einnehmen. Dies ist insbesondere bei Mehrscheibenkupplungen von großem Vorteil. Betreffend die Plattenlappen 33 der Anpressplatte 32 ist aufgrund der vorgeschlagenen Vernietreihenfolge erreicht, dass die Plattenlappen flächenmäßig nicht durch Vemietaussparungen wesentlich reduziert sind, so dass maximale Wärmeabfuhr für die Plattenlappen 33 erreicht wird. Ferner wird auch erreicht, dass die Zwischenplatte 32 im Bereich der Plattenlappen 33 vergleichsweise steif ist, also nicht durch Aussparungen oder Bohrungen für Vernietungen geschwächt ist. Auch in Bezug auf die Zwischenplatte werden damit schädliche Spannungen vermieden und eine vergleichsweise große Berstdrehzahl erreicht.
- Durch die Ausführung der Zwischenplatte und der Anpressplatte mit den zwischen die Gehäusestege 18 vorstehenden Plattenlappen wird bezogen auf einen gegebenen axialen und radialen Bauraum eine maximale Wärmekapazität für die Zwischenplatte und die Anpressplatte erreicht, unter gleichzeitiger Erreichung - wie erwähnt - einer sehr guten Wärmeableitung nach außen. Dadurch, dass wesentliche Massenanteile der Anpressplatte und der Zwischenplatte vergleichsweise weit radial außen liegen, wird überdies ein vergleichsweise großes Trägheitsmoment erreicht, was gute Leerlaufeigenschaften für die Reibungskupplung ergibt.
- Die radiale Überdeckung der Anpressplattenrippen 50 und der Tangentialblattfedern radial außerhalb des Reibbereichs der Kupplungsscheibenanordnung spart viel radialen Bauraum. Es ist einerseits gegeben auf einen gegebenen maximalen Durchmesser der Kupplung ein sehr großer maximaler Durchmesser der Kupplungsscheiben möglich und andererseits kann ein sehr großer maximaler Durchmesser der Membranfeder vorgesehen werden. Es lässt sich eine Membranfeder mit vergleichsweise großer Anpresskraft und gleichzeitig einem sehr hohen Axialhub an der Anpressplattenschneide (den Abstützrippen 50) für einen gegebenen Axialweg der Membranfederzungen am Ausrücker verwirklichen. Die Membranfeder kann sich fast über den gesamten radialen Ausdehnungsbereich des Kupplungsgehäuses erstrecken, wie in Fig. 4 und 5 erkennbar. Die Federlappen 37, die durch Membranfederaussparungen im Bereich der Gehäusestege 18 definiert sind, wirken als Hebelarmverlängerung der Membranfeder nach radial außen, wodurch ein vergleichsweise großer Freiabhub erreicht wird, was insbesondere für Mehrscheibenkupplungen, also Kupplungen mit mehreren Kupplungsscheiben, besonders vorteilhaft ist.
- Die Ausführung der Lüftfederanordnung als auch zur Momentenübertragung dienenden Tangentialblattfederanordnung ist kostengünstig und funktional vorteilhaft, wie erläutert.
- Die Ausführung der Tangentialblattfederanordnung in Form von mehreren zwischen dem Gehäuse und der Zwischenplatte bzw. zwischen der Zwischenplatte und der Anpressplatte wirkenden Tangentialblattfedern, also die Verwendung einer mehrschichtigen Tangentialblattfederanordnung an beiden Anbindungen, bietet den Vorteil, dass beim Verbiegen der Tangentialblattfeder Reibung zwischen den Tangentialblattfedern auftritt, die für eine vorteilhafte Dämpfung sorgt. Es kann so ein Flattern oder Schwingen insbesondere der Zwischenplatte unterbunden werden. Die Stärke der erreichten Dämpfung kann dadurch eingestellt werden, dass die Anzahl von Tangentialblattfedern in einem Tangentialblattfederpaket gewählt ist. Je mehr Tangentialblattfedern ein Tangentialblattfederpaket bilden, desto mehr Reibung tritt auf und desto mehr Dämpfung wird erzielt. Für eine maximale Reibung und damit maximale Dämpfung sind die Tangentialblattfedern so in einem Tangentialblattfederpaket anzuordnen, dass sie flächig aufeinander liegen und flächig aneinander reiben.
- Durch die Momentenübertragung von dem Schwungrad über die Tangentialblattfedern auf die Zwischenplatte und die Anpressplatte wird das Gehäuse selbst, werden speziell die Gehäusestege 18, nicht durch den Momentenfluss belastet. Die Gehäusestege 18 brauchen deswegen nur im Hinblick darauf angemessen dimensioniert werden, dass sie die durch die Beaufschlagung der Anpressplatte durch die Membranfeder auftretenden Gegenkräfte abstützen und im Betrieb die auftretenden Fliehkräfte aushalten müssen.

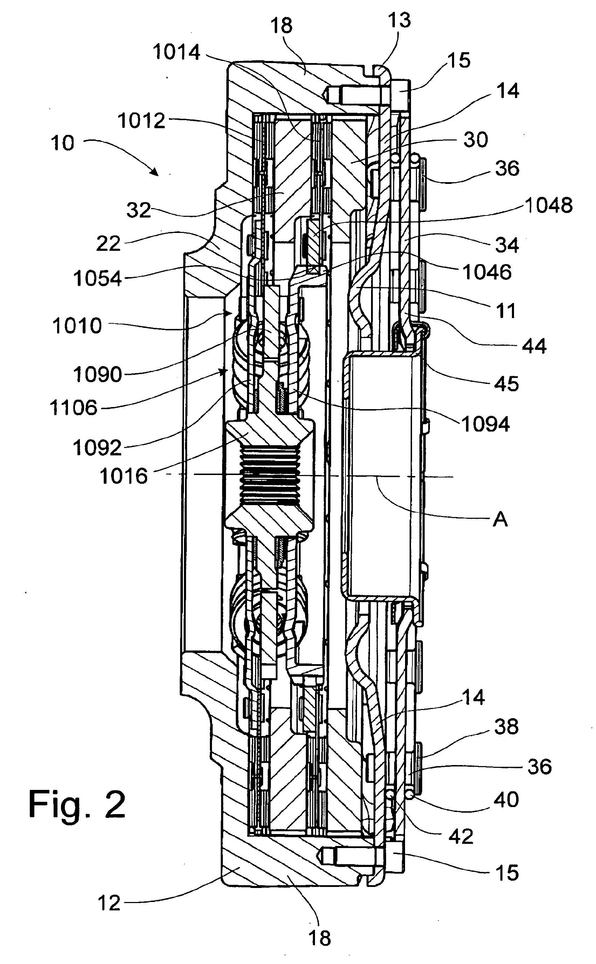

- Der Gehäusedeckel 14 kann vorteilhaft über einen Außenbund 13 (vgl. Fig. 2) an den Gehäusestegen 18 zentriert sein, so dass die Verschraubung 15 keine Zentrierungsfunktion ausüben muss. Alternativ kann die Zentrierung über Passschrauben 15 erfolgen, was Herstellungskosten einspart.
- Der Gehäusedeckel 14 kann zweckmäßig mit einer ringförmigen Versteifungssicke 11 ausgeführt sein.
- Eine Auswuchtung des fertigen Kupplungsmoduls kann zweckmäßig durch Einbringen von Wuchtbohrungen im Schwungrad 22 erfolgen, von denen eine Wuchtbohrung 23 in Fig. 1 angedeutet ist.

Die Kupplungsscheibenanordnung 1010 des gezeigten Ausführungsbeispiels umfasst, wie erwähnt, zwei Reibbelageinheiten 1012 und 1014, die in Richtung einer Drehachse A, um welche sich die Kupplungsscheibenanordnung 1010 im Kupplungsbetrieb dreht, zueinander im Abstand angeordnet sind und die zum Ermöglichen von Ein- und Auskuppelvorgängen in Richtung zur Drehachse A bezüglich einander verlagerbar sind.

Die Kupplungsscheibenanordnung 1010 umfasst ein Nabenelement 1016, das an seiner Innenumfangsfläche eine Verzahnung 1018 aufweiset, die eine drehfeste Ankopplung an einer Welle, beispielsweise eine nicht dargestellte Getriebeeingangswelle, herstellen kann.

Zur Ausbildung eines Torsionsschwingungsdämpfers ist das Nabenelement 1016 mit einem damit fest verbundenen, vorliegend einteiligen zentralen Scheibenelement 1090 ausgeführt und auf beiden axialen Seiten des zentralen Scheibenelements 1090 ist jeweils ein Deckscheibenelement 1092 bzw. 1094 relativ zum Nabenelement 1016 verdrehbar angeordnet. Zwischen dem zentralen Scheibenelement 1090 und dem Deckscheibenelement 1092 einerseits und zwischen dem zentralen Scheibenelement 1090 und dem Deckscheibenelement 1094 andererseits sind Reib- und Lagerringe 1108 und 1110 sowie eine den gewünschten Reibeingriff herstellende Anpressfeder 1112 angeordnet. Die beiden Deckscheibenelemente 1092, 1094 sind auf an sich bekannte Weise, beispielsweise durch sich in axialer Richtung erstreckende Verbindungsbolzen 1093 zur gemeinsamen Drehung relativ zum Nabenelement 1016 verbunden und in einem gewünschten Axialabstand gehalten. Die Deckblechelemente und das zentrale Scheibenelement weisen jeweils Federfenster 1096, 1098 und 1100 auf, an welchen in Umfangsrichtung jeweilige Dämpferfedem 1102 abgestützt sind, die eine Relatiwerdrehbewegung der Deckscheibenelemente 1092, 1094 relativ zum Nabenelement 1016 und seinem zentralen Scheibenelement 1090 zulassen. Wie in den Figuren erkennbar, können die Dämpferfedem von Schraubendruckfedern gebildet sein, speziell auch von zwei ineinander geschachtelten Schraubendruckfedern unterschiedlichen Windungsdurchmessers.

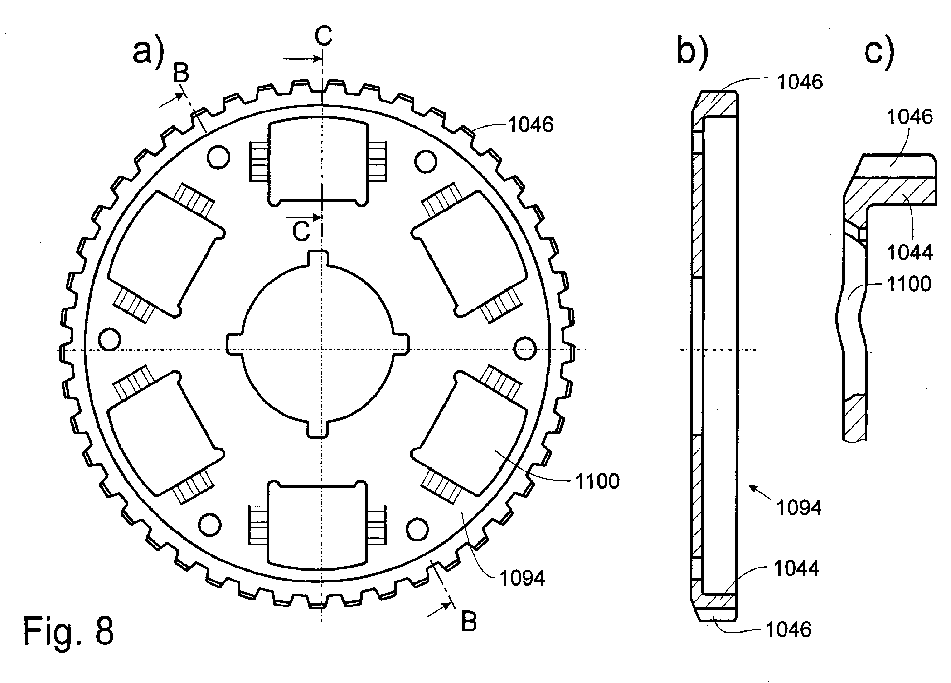

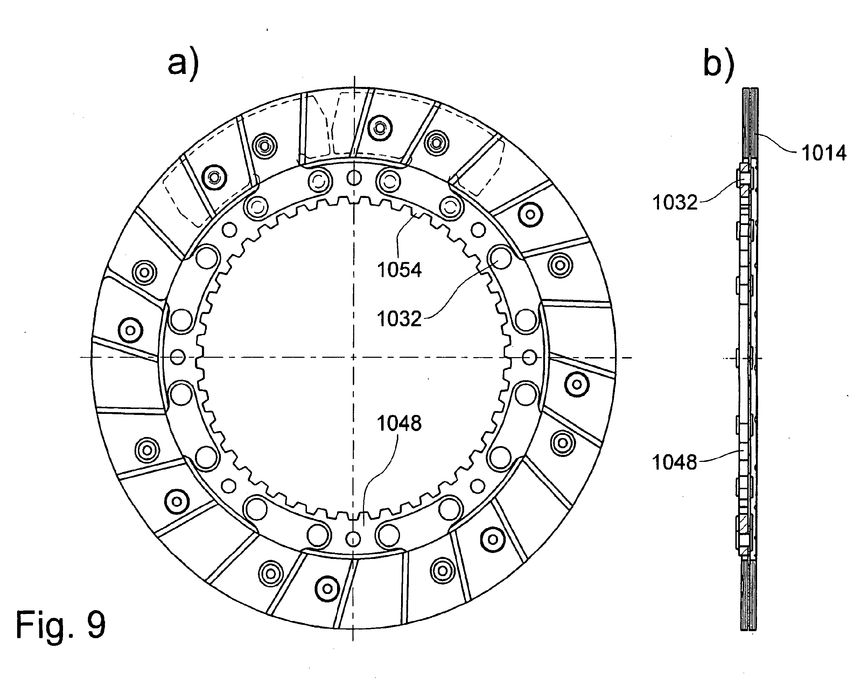

Die Reibbelageinheiten 1012 und 1014 sind von einer jeweiligen Belagträgerscheibe und den auf beiden axialen Seiten der Belagträgerscheibe angebrachten Reibbelägen gebildet. Die zwischen dem Schwungrad 22 und der Zwischenplatte 32 angeordnete Reibbelageinheit 1012 ist mit ihrer Reibbelagträgerscheibe fest am Deckscheibenelement 1092 angebracht, beispielsweise mit diesem mittels Niete 1031 vernietet. Die andere Reibbelageinheit 1014 ist mit ihrer Belagträgerscheibe an einem auch als Mitnehmerscheibe oder Mitnehmerring bezeichenbaren Trägerelement 1048 fest angebracht, beispielsweise ebenfalls mittels Niete 1032 vernietet. Der Mitnehmerring 1048 sitzt mit einer Innenverzahnung 1054 auf einer axial lang gestreckten Außenverzahnung 1046 des schwungradfernen Deckscheibenelements 1094, welches im Querschnitt topfförmig mit einer sich in Umfangsrichtung erstreckenden Umfangswandung 1044 ausgeführt ist, die die Außenverzahnung aufweist. Damit der Mitnehmerring 1048 und damit die Reibbelageinheit 1014 möglichst reibungsfrei axial verschieblich an der Außenverzahnung 1046 des Deckscheibenelements 1094 geführt ist und dieses Deckscheibenelement für den Erhalt einer axialen Erstreckung der Außenverzahnung hinreichend stabil ist, weist es eine hinreichende axiale Dicke auf und ist vorliegend axial dicker als das Deckscheibenelement 1092 ausgeführt, bei dem durchaus eine Verkippung oder Verbiegung des Deckscheibenelements 1092 in gewissem Ausmaß tolerabel ist. Eine Verschwenkung oder Verbiegung des Deckscheibenelements 1094 würde hingegen unter Umständen zu einer Verkantung der Innenverzahnung mit der Außenverzahnung oder zumindest für eine schwer gängige Verschiebbarkeit des Mitnehmerrings 1048 an der Außenverzahnung des Deckscheibenelements 1094 führen. Die Ausführung des Deckscheibenelements 1094 und des Mitnehmerrings 1048 mit einer Außenverzahnung 1044 bzw. einer Innenverzahnung 1054 ist sowohl in den Fig. 1 und 2 und besonders gut in den Fig. 8 und 9 zu erkennen. In Fig. 7 und Fig. 9 sind ferner die am Deckscheibenelement 1092 bzw. am Mitnehmerering 1048 angebrachten, den Belagträgerring der Reibbelageineheit 1012 bzw. den Belagträgerring der Reibbelageinheit 1014 bildenden Belagträgerelemente und deren Vemietungen mit dem radial äußeren Bereich des Deckscheibenelements 1092 bzw. mit dem Mitnehmerring 1048 zu erkennen.

Wie in den Axiaischnittansichten der Kupplungsscheibenanordnung bzw. der Kupplung erkennbar, ist das dem Schwungrad nähere Deckscheibenelement 1092 nur wenig gekröpft ausgeführt und insoweit besonders einfach herstellbar. Wie üblich, ist das Deckscheibenelement als Deckblech ausgeführt. Das andere Deckscheibenelement, das vorzugsweise in einem Pressumformungsvorgang, z. B. einem Tiefziehvorgang, mit dem in radialer Richtung sich erstreckenden, die Fenster 1100 aufweisenden Bodenwandbereich und dem die Außenverzahnung 1046 aufweisenden Umfangswandungsbereich 1044 ausgeführt ist, erstreckt sich mit seinem Umfangswandungsbereich 1044 weg vom Torsionsschwingungsdämpfer in Richtung zur Membranfeder, ist also vom Torsionsschwingungsdämpfer weg gekröpft. Die Kupplungsnabe 1016 mit dem Torsionsschwingungsdämpfer kann deswegen vergleichsweise dicht an dem Schwungrad 22 bzw. am Motor platziert sein, so dass mehr Bauraum für die Membranfederzungen und deren Auslenkung in Richtung zum Motor und die entsprechende Bewegung des auch als Ausrücktopf bezeichenbaren Ausrückrings 45 zur Verfügung steht. Der radial innerhalb der Reibbeläge zur Verfügung stehende Bauraum wird also gut ausgenutzt. Es sei angemerkt, dass man durchaus auch das schwungradfeme Deckscheibenelement 1094 mit einer Innenverzahnung und dementsprechend das dann mit einem axial vorstehenden Ringflansch oder dergleichen auszuführenden Trägerelement 1048 mit einer Außenverzahnung ausführen kann.

Weitere Einzelheiten des Ausführungsbeispiels für die Kupplungsscheibenanordnung und für die gesamte Zweischeibenkupplung entnimmt der Fachmann den Figuren und brauchen hier nicht näher ausgeführt werden.

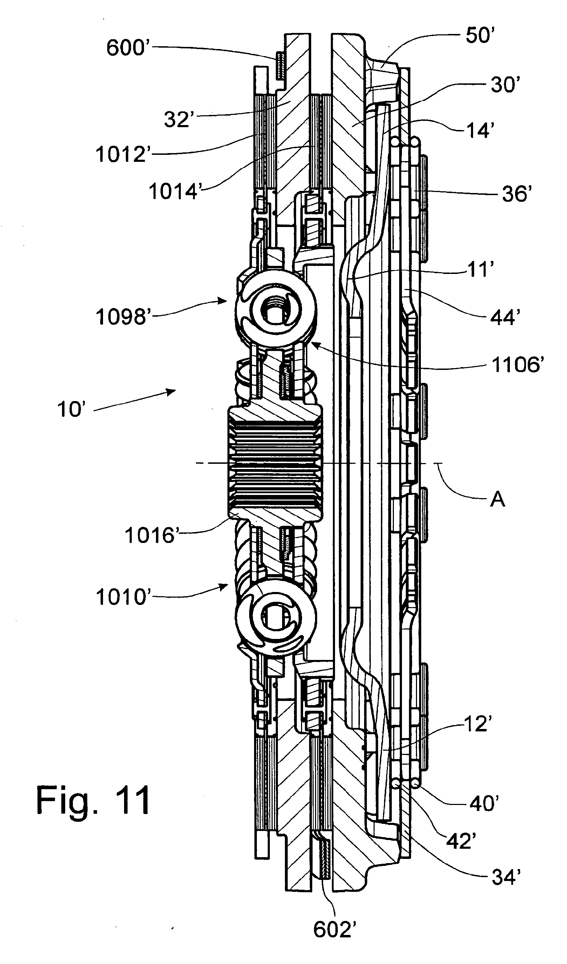

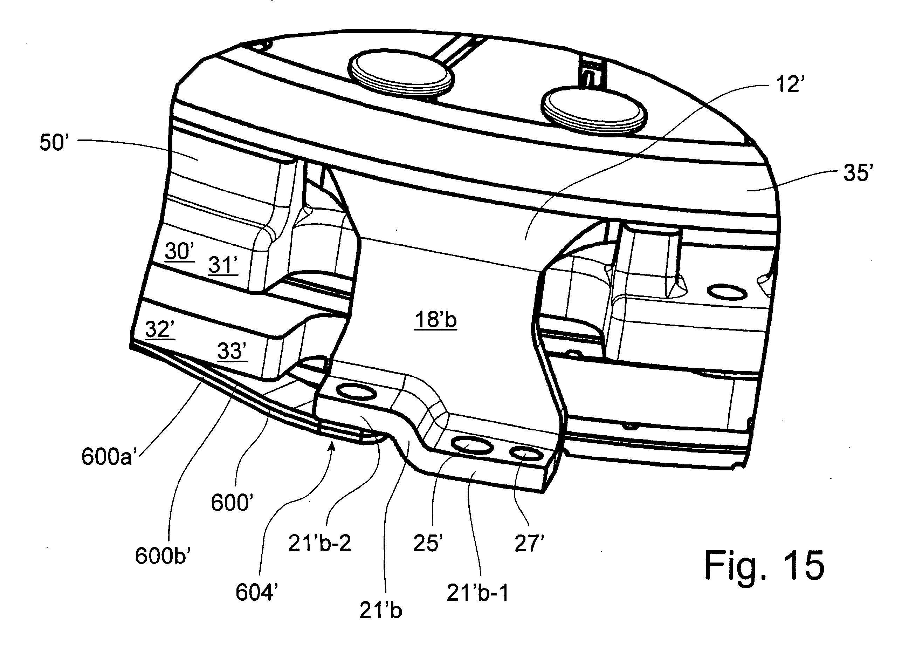

Die Fig. 11 bis 16 zeigen ein weiteres Ausführungsbeispiel einer Mehrscheibenkupplung als Ganzes, mit ihrer eine Zwischenplatte und eine Anpressplatte aufweisenden Plattenanordnung, mit der gesamten Druckplattenbaugruppe, die die Plattenanordnung und ein Kupplungsgehäuse aufweist, welches zur Verbindung mit einem nicht dargestellten, als Widerlager dienenden Schwungrad ausgeführt ist, sowie mit einer Zweischeiben-Kupplungsscheibenanordnung im Wesentlichen entsprechend der Kupplungsscheibenanordnung der Fig. 7 bis 10.

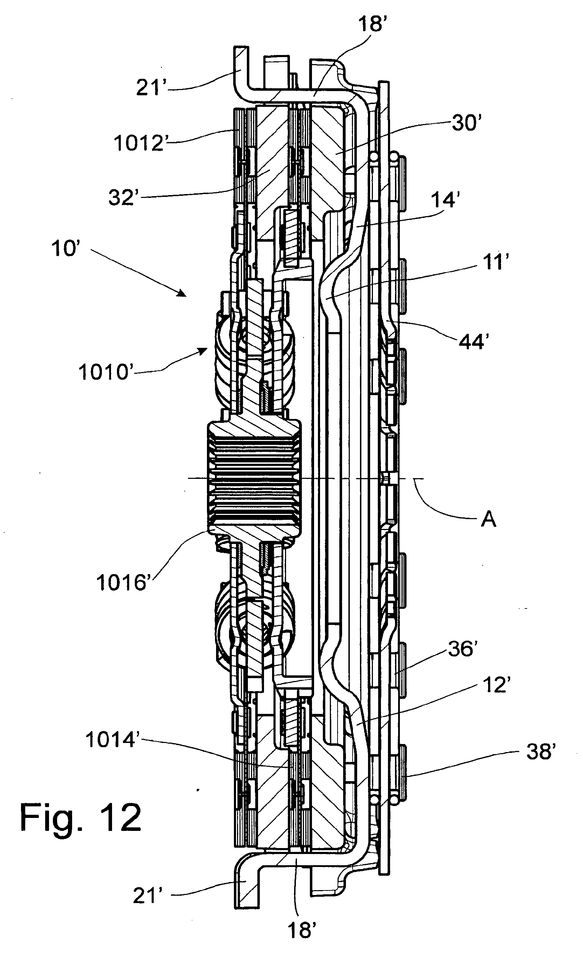

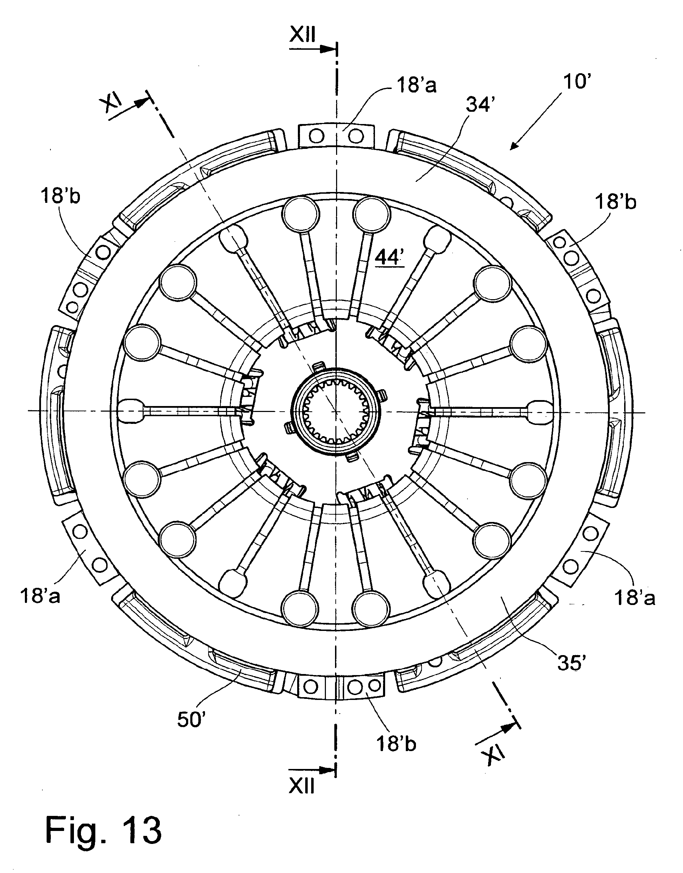

Es werden im Folgenden nur die Unterschiede zwischen der Ausführungsform der Fig. 11 bis 16 einerseits und der Ausführungsform der Fig. 1 bis 6 andererseits erläutert, wobei für analoge oder identische Komponenten die gleichen Bezugszeichen versehen mit einem Strich (10', 12' usw.) verwendet werden. Soweit Bestandteile und Elemente der Kupplung im Folgenden nicht angesprochen bzw. in den Fig. 11 bis 15 nicht mit einem Bezugszeichen verstehen sind, wird ausdrücklich auf die vorangehende Erläuterung des Ausführungsbeispiels der Fig. 1 bis 6 sowie der Kupplungsscheibenanordnung der Fig. 7 bis 10 verwiesen. Der Längsschnitt gemäß Fig. 11 entspricht einem Schnitt nach Linie XI-XI in Fig. 13 und der Längsschnitt gemäß Fig. 12 entspricht einem Schnitt nach Linie XII-XII in Fig. 13.

Wie insbesondere in Fig. 12, 15 und 16 gut zu erkennen, ist beim Ausführungsbeispiel der Fig. 11 bis 16 das Gehäuse auf Grundlage einer den Deckel 14 des ersten Ausführungsbeispiels funktionsmäßig entsprechenden, nämlich die Membranfeder 34' tragenden Wandung 14' gebildet, die zweckmäßig als "Gehäuseboden" bezeichnet werden könnte. Die Wandung 14' geht einteilig über in sich axial erstreckende Stütz- oder Abstützabschnitte 18', die einteilig mit flanschartigen Gehäusefüßen 21' ausgeführt sind, mit denen das Gehäuse mit einer Widerlageranordnung, im Ausführungsbeispiel einem Schwungrad, verbindbar ist. Hierzu sind die Gehäusefüße 21' mit Schraubbohrungen 25' und Passstiftbohrungen 27' ausgeführt. Die Gehäusewandung 14' kann mit ihren lappenartig ausgeführten Stützabschnitten 18' und den flanschartigen Gehäusefüßen 21' zweckmäßig durch Umformen eines entsprechenden Metallscheibenteils, insbesondere Blechteils, hergestellt werden, beispielsweise durch Tiefziehen.

Es sind zweierlei Sorten von Stützabschnitten 18' vorgesehen, nämlich Stützabschnitte 18'a, die ähnlich wie die Stützabschnitte 18 des ersten Ausführungsbeispiels primär zum mittelbaren Abstützen der Membranfeder an der Widerlageranordnung, speziell dem Schwungrad, dienen und mit nur zur Anbindung des Gehäuses an der Widerlageränordnung dienenden Gehäusefüßen 21'a ausgeführt sind, und Stützabschnitte 18'b, die mit einem speziell ausgestalteten Gehäusefuß 21'b ausgeführt sind, der einen ersten, eine Schraubbohrung 25' und eine Passstiftbohrung 27' aufweisenden Abschnitt 21'b-1 und einen demgegenüber in Richtung zur Membranfeder versetzten Abschnitt 21'b-2 aufweist, an dem das Tangentialblattfederpaar 600' mittels eines jeweiligen Nietbolzens 604' angenietet ist. Zu beachten ist, dass beim gezeigten Ausführungsbeispiel das jeweilige Tangentialblattfederpaar 600' auf der von der Zwischenplatte 32' abgekehrten Seite des Gehäusefußes 21'b an diesem angenietet ist, also auf der dem Schwungrad zugewandten Axialfläche des Gehäusefußabschnitts 21'b-2. Hierdurch wird erreicht, dass für die Tangentialblattfedern mehr Bauraum in Axialrichtung zur Verfügung steht bzw. dass insgesamt die Doppelkupplung axial besonders kompakt ausgeführt werden kann.

Wie in Fig. 13 zu erkennen, sind drei Stützabschnitte 18'b vorgesehen, deren Gehäusefüße 21'b für die Halterung der Zwischenplatte mittels der Tangentialblatt 600' ausgeführt sind, und sind drei jeweils zwischen zwei Stützabschnitten 18'b angeordnete Stützabschnitte 18'a vorgesehen, deren Gehäusefüße 21'a nur zur Anbindung des Kupplungsgehäuses 12' an dem Schwungrad oder dergleichen dienen.

Die Anbindung der Tangentialblattfedern an einem jeweiligen Gehäusefuß, welcher mit wenigstens einer Passstiftbohrung zur Zentrierung des Kupplungsgehäuses gegenüber einem Schwungrad (oder der Ausgangsseite eines Zwei-Massen-Schwungrads oder einer anderen Komponente) dient, ist insoweit besonders vorteilhaft, als dass eine hohe Positionierungsgenauigkeit für die Membranfedem und damit für die von diesen gehalterte Zwischenplatte und mittelbar auch für die an der Zwischenplatte über Tangentialblattfedern 602' gehalterte Anpressplatte erreicht wird, so dass ein guter Rundlauf erreicht bzw. Unwucht vermieden werden kann. Bei dem gezeigten Ausführungsbeispiel ist ferner vorteilhaft, dass die Anschraubbohrung zum Anschrauben des Kupplungsgehäuses 12' an einem Schwungrad oder dergleichen positionsmäßig sehr eng benachbart zur Vemietungsstelle mit den Tangentialblattfedern 600' liegt, so dass eine unter Last ggf. auftretende Bauteilverformung minimiert wird, da die entsprechenden Kräfte vom Gehäusefuß unmittelbar an der Widerlageranordnung (Schwungrad oder dergleichen) abgestützt werden.

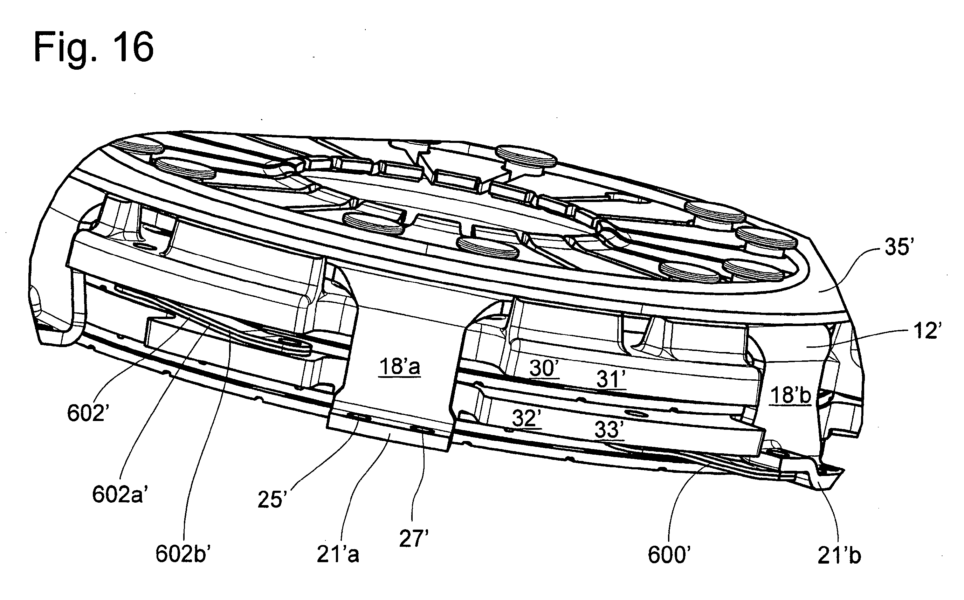

Wie Fig. 16 erkennen lässt, sind die Tangentialblattfedern 600' und die Tangentialblattfedern 602' in verschiedenen Winkel-Aussparungsbereichen zwischen den Stützabschnitten 18'a und 18'b angeordnet. Um einen Kraftftuss über eine größere Strecke durch die Zwischenplatte 32' zu vermeiden, können die Tangentialblattfedern 600' und 602' in Abweichung von der Darstellung aber auch gemeinsam in einem jeweiligen Winkel-Aussparungsbereich angeordnet sein, ähnlich wie dies beim Ausführungsbeispiel der Fig. 1 bis 6 der Fall ist.

Es soll darauf hingewiesen werden, dass in Abweichung von der gezeigten Ausführungsform die die Anpressplatte haltenden Tangentialblattfedern an anderen Stellen des Kupplungsgehäuses angebracht, insbesondere angenietet sein könnten, beispielsweise an der Gehäusewandung 14', speziell vorzugsweise auf der Membranfederseite (Getriebeseite) der Gehäusewandung 14'. Insbesondere wird aber an eine Anbringung dieser Tangentialblattfedern an einem benachbart zur Anpressplatte angeordneten Befestigungsabschnitt eines jeweiligen Stützabschnitts gedacht, und zwar vorzugsweise auf einer von der Anpressplatte abgekehrten Seite eines solchen Befestigungsabschnitts. Es wird ein entsprechender axialer Bauraumgewinn wie beim Ausführungsbeispiel der Fig. 11 bis 16 erreicht.

Die Ausführungsformen der Fig. 11 bis 16 zeichnet sich nicht nur durch eine einfache Herstellbarkeft insbesondere des Gehäuses 12' aus, sondern dadurch, dass die verschiedenen Komponenten auch einfach zusammengebaut werden können. Vorzugsweise werden zuerst die Reibbelageinheiten 1012' und 1014' aufweisenden Kupplungsscheiben mit der Anpressplatte 30' und der Zwischenplatte 32' in richtiger axialer Reihenfolge zusammengelegt. Vorzugsweise ist eine der beiden Platten zuvor schon mit den Tangentialblattfedern 602' ausgestattet worden, und die Zwischenplatte ist vorzugsweise zuvor schon mit den Tangentialblattfedern 600' ausgestattet worden. Anschließend werden die Tangentialblattfedern 602' mit der anderen Platte vernietet. Die so erhaltene Komponentengruppe, also die Anpressplatte 30', die Kupplungsscheibenanordnung und die Zwischenplatte 32' können dann einfach in das Gehäuse eingesetzt werden, worauf dann die Tangentialblattfedern 600' mit den Gehäusefüßen 21'b vernietet werden.

Die so erhaltene Baueinheit kann einfach an den Gehäusefüßen mit einer zugeordneten Widerlageranordnung, beispielsweise einem Schwungrad, verschraubt werden, gewünschtenfalls mit einer schon in einem Antriebsstrang vormontierten Widerlageranordnung.

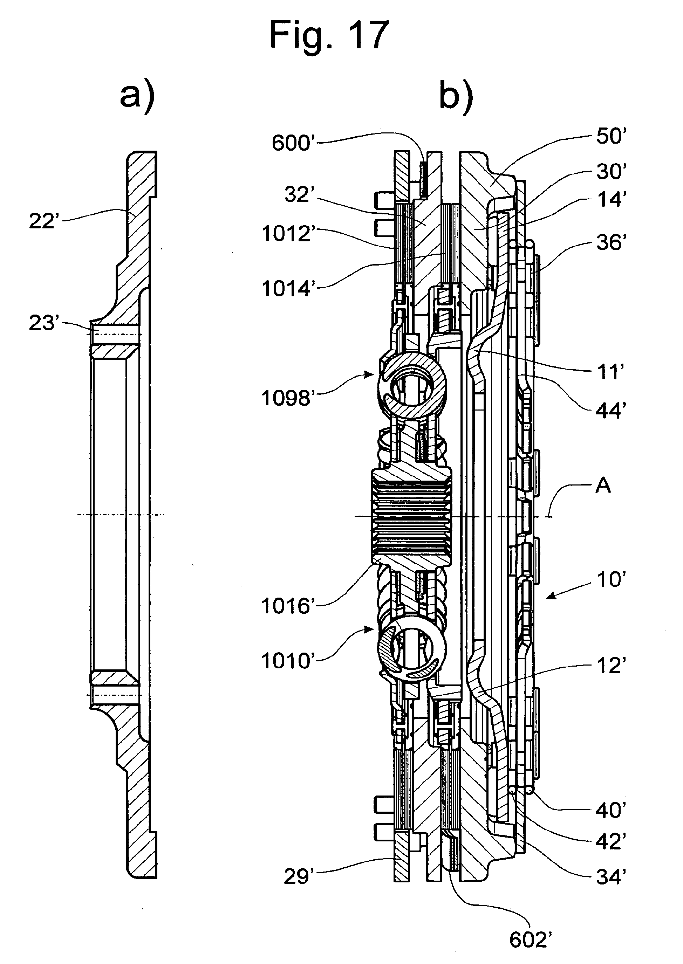

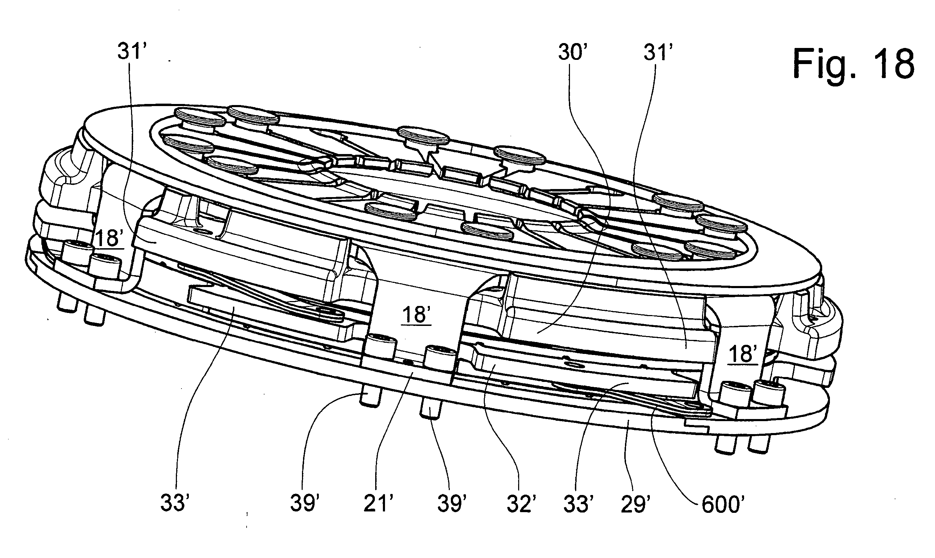

Die Fig. 17 zeigt eine von der Ausführungsform der Fig. 11 bis 16 leicht abweichende Ausführungsvariante einer Zweischeibenkupplung in Kombination mit einem zugeordneten Schwungrad 22'. Für die Erläuterung der Zweischeibenkupplung werden für analoge oder identische Komponenten die gleiche Bezugszeichen wie für die Ausführungsform der Fig. 11 bis 16, also Bezugszeichen versehen mit einem Strich (10', 12' usw.) verwendet. Soweit Bestandteil oder Elemente der Kupplung im Folgenden nicht angesprochen bzw. in den Fig. 17 und 18 nicht mit einem Bezugszeichen versehen sind, wird ausdrücklich auf die vorangehende Erläuterung des Ausführungsbeispiels der Fig. 1 bis 6, der Kupplungsscheibenanordnung der Fig. 7 bis 10 und des Ausführungsbeispiels der Fig. 11 bis 16 verwiesen.

Wie bei der in Bezug genommenen Ausführungsform der Fig. 11 bis 16 ist bei der Ausführungsvariante der Fig. 17 und 18 das Gehäuse auf Grundlage einer die Membranfeder 34' tragenden Wandung 14' gebildet, die einteilig in sich axial erstreckende Stütz- oder Abstützabschnitte 18' übergeht, die einteilig mit flanschartigen Gehäusefüßen 21' ausgeführt sind, vermittels derer das Gehäuse mit einer Widerlageranordnung, im Ausführungsbeispiel etwa mit dem Schwungrad 22', verbindbar ist. An den Stützabschnitten 18', genauer an den Gehäusefüßen 21' ist ein Zwischenring 29' angeordnet, an dem die Lüftfedern 600' festgenietet sind. Der Zwischenring 29' ist mit zumindest einigen der Gehäusefüße 21', beispielsweise in Umfangsrichtung mit jedem zweiten Gehäusefuß 21', vernietet, damit das Gehäuse mit den darin gehaltenen Platten und dem Zwischenring 29' zusammengehalten wird und eine Baueinheit bildet. Überdies gehen zur Befestigung des Gehäuses an der Widerlageranordnung dienende Schraubbolzen 39' durch Befestigungsöffnungen der Gehäusefüße 21' und komplementäre Befestigungsöffnungen des Zwischenrings 29', so dass der axial zwischen den Gehäusefüßen 21' und der Widerlageranordnung angeordnete Zwischenring 29' im montierten Zustand der Kupplung auch mittels der Befestigungsbolzen 39' einerseits mit dem Gehäuse und andererseits mit der Widertageranordnung, hier dem Schwungrad 22', fest verbunden ist.

Beide Ausführungsformen, die Ausführungsform der Fig. 11 bis 16 ebenso wie die Ausführungsform der Fig. 17 und 18 bietet gegenüber der Ausführungsform der Fig. 1 bis 6 den Vorteil, dass die ganze Kupplung, allerdings ohne das als Widerlager dienende Schwungrad, als eine vormontierte Einheit bereitstellbar ist, die über die Gehäusefüße mit dem Schwungrad verschraubt wird. Bei der Ausführungsvariante der Fig. 17 und 18 hält der dem Schwungrad zugewandte Ring die Einheit zusammen und versteift die Stützabschnitte bzw. Gehäusefüße, insbesondere auch gegen wirkende Fliehkräfte im Betrieb.

Bei beiden Ausführungsvarianten ist es vorteilhaft möglich, dass die Baueinheit von der Ausrückerseite her am Schwungrad oder Zwei-Massen-Schwungrad festgeschraubt wird. Eine vom Aufwand her unvorteilhafte Verschraubung von der Motorseite her durch das Schwungrad bzw. Zwei-Massen-Schwungrad hindurch kann also vermieden werden.

Ein weiterer Vorteil ist, dass eine entsprechende Kupplung im Prinzip an jedem von den Abmessungen her geeigneten Schwungrad bzw. Zwei-Massen-Schwungrad anbaubar ist. Es ist also nicht erforderlich, eine spezielle Adaption der Kupplung an ein Schwungrad vorzunehmen bzw. das Schwungrad in die Kupplungskonstruktion einzubeziehen.

Die Kupplung ist insbesondere auch für für besonders hohe Drehmomente ausgelegte, insbesondere zweireihige Zwei-Massen-Schwungräder geeignet, weil durch diese nicht hindurchgeschraubt werden muss.

Ein Vorteil des Zwischenringes 29' ist, dass das Drehmoment vom Schwungrad in den Ring und von diesem unmittelbar über die Tangentialblattfedern in die Zwischenplatte geleitet wird, von wo das restliche Drehmoment über die weiteren Tangentialblattfedern zur Anpressplatte übertragen wird. Das Gehäuse und die Gehäusefüße übertragen somit kein Drehmoment. Sie sind dadurch im Wesentlichen belastungsfrei und können entsprechend schlanker konstruiert sein. Unter Drehmomentbelastung kommt es somit nicht zu Gehäusebelastungen, insbesondere nicht zu Gehäuseverbiegungen. Die Stützabschnitte und Gehäusefüße können somit in Umfangsrichtung sehr schmal und im Übrigen auch dünnwandig gebaut werden. Es resultiert ein Bauraumgewinn für die Zwischenplatte und die Anpressplatte sowie zum Verbinden der Platten mit dem Gehäuse über die Tangentialblattfedern. Auch die Montage ist vergleichsweise einfach.

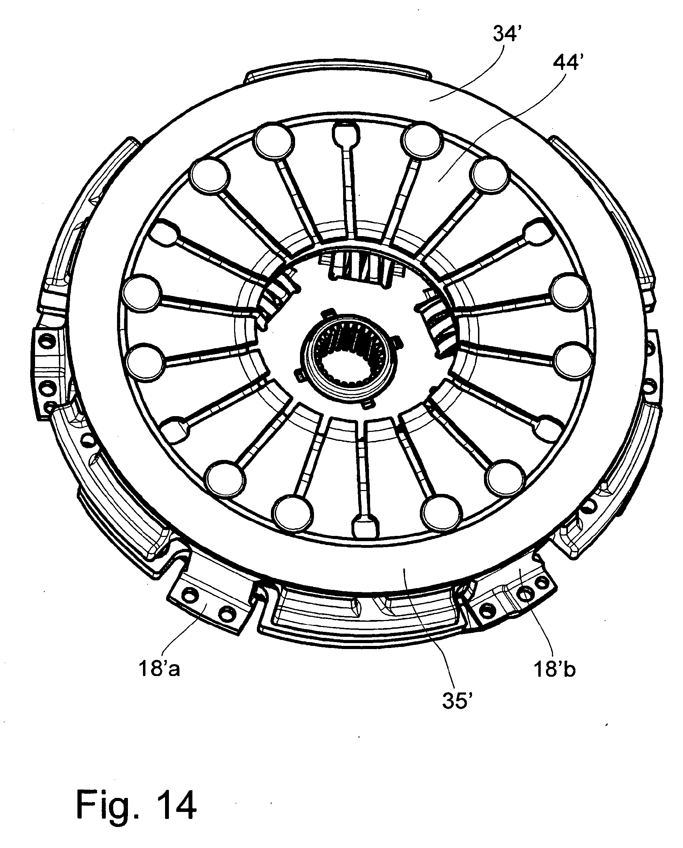

Die angesprochenen Vorteile für die Ausführungsvariante mit dem Zwischenring 29' gelten ähnlich auch für die Ausführungsvariante der Fig. 11 bis 16, da hier nur die Gehäusefüße 21'b in den Momentenfluss zwischen Schwungrad und Zwischenplatte einbezogen sind, nicht hingegen die sich in axialer Richtung erstreckenden Bereiche der Stützabschnitte 18'b, so dass es ausreicht, nur die Gehäusefüße 21'b entsprechend stabil auszuführen. Der Vorteil dieser Ausführungsvariante gegenüber der Ausführungsvariante der Fig. 14 und 18 ist, dass auf den Zwischenring 29' als gesonderte Komponente verzichtet ist, wodurch sich Kostenvorteile ergeben. Trotz Verzicht auf den Zwischenring ist die Kupplung im Zusammenbauzustand gemäß Fig. 16 gut als Baueinheit handhabbar und die einzelnen Bestandteile sind sicher zusammengehalten. Eine Versteifung der Stützabschnitte 18' insbesondere gegen Fliehkräfte im Betrieb erfolgt über das zugeordnete Schwungrad.

Gegenüber der Ausführungsform der Fig. 1 bis 6 bieten die angesprochenen Ausführungsvarianten den großen Vorteil, dass eine einfache Ausführung des Schwungrads ohne daran stegartig vorgesehene Stützabschnitte ausreicht, so dass das Schwungrad kostengünstiger herstellbar ist und das Zerspanvolumen deutlich kleiner ist. Die Stützabschnitte und Gehäusefüße können mit der diese einteilig aufweisenden Wandung sehr einfach als Blechformteil ausgebildet werden, wobei im Falle der Ausführungsvariante mit dem Zwischenring sogar nur zwei gerade Biegelinien ausreichend sind. Beispielsweise kann einmal der Stützabschnitt an einer Biegelinie zum flachen Boden- oder Deckelbereich abgekantet werden und einmal zur Ausbildung des flanschartigen Gehäusefußes abgekantet werden. Demgegenüber sind bei der Ausführungsvariante ohne Zwischenring die Gehäusefüße 21'b etwas komplizierter gebogen. Es hat sich aber gezeigt, dass die entsprechende Formgebung der Gehäusefüße 21'b keine Probleme macht.

Ein weiterer Vorteil der angesprochenen Ausführungsvarianten gegenüber der Ausführungsform der Fig. 1 bis 6 ist, dass das Massenträgheitsmoment der Kupplung etwas geringer sein kann, da auf die massiven Abstützstege des Schwungrads verzichtet ist.

Es sind diverse Abwandlungen gegenüber den erläuterten Ausführungsvarianten möglich. So können betreffend die Ausführungsform der Fig. 17 und 18 von den beispielsweise sechs Stützabschnitten 18' einige an ihrem Gehäusefuß 21' jeweils mit wenigstens einer Bohrung zur Verschraubung mit dem Schwungrad und jeweils wenigstens eine Vernietung mit dem Zwischenring 29' aufweisen, während die anderen Stützabschnitte an ihren Gehäusefüßen mit wenigstens einer, vorzugsweise wenigstens zwei Bohrungen zum Verschrauben mit dem Schwungrad, durch den Zwischenring hindurch, versehen sind. Vorzugsweise sind diese Stützabschnitte in Umfangsrichtung alternierend vorgesehen, so dass im Falle von sechs Stützabschnitten drei mit dem Zwischenring vernietete Gehäusefüße mit drei nicht mit dem Zwischenring vernietete Gehäusefüße abwechselnd vorgesehen sind. Es können aber auch alle Gehäusefüße gleich ausgebildet sein und jeweils wenigstens eine, vorzugsweise zwei Bohrungen zum Verschrauben mit dem Schwungrad, jeweils eine Vernietung mit dem Zwischenring und ggf. auch eine Bohrung geringen Durchmessers zum Eingriff mit einem jeweiligen Passstift am Schwungrad zum Zentrieren der Kupplung relativ zum Schwungrad aufweisen.

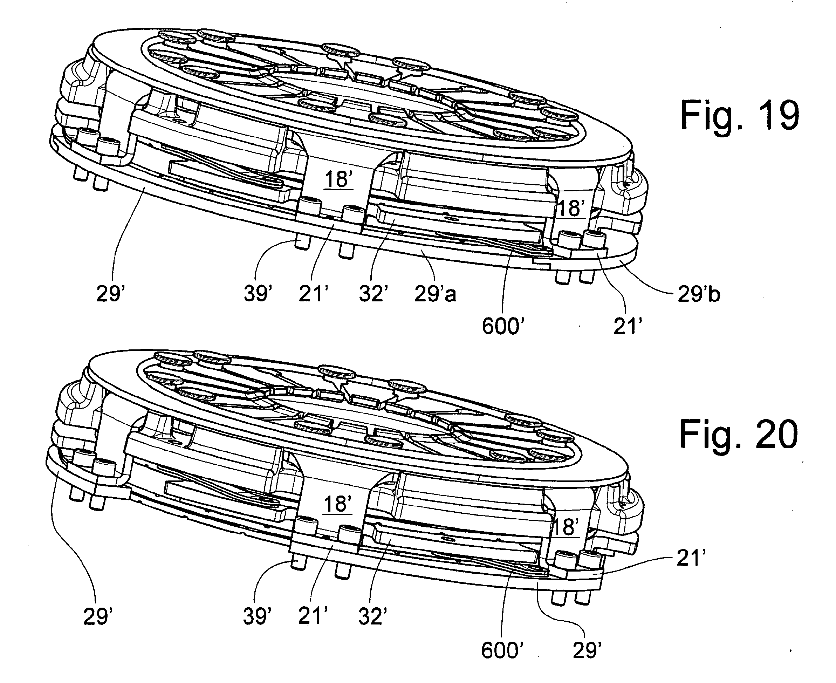

Bevorzugt ist der Zwischenring 29' einteilig ausgeführt, wie in Fig. 18 gezeigt. Demgegenüber zeigt Fig. 19 die Möglichkeit, dass der Zwischenring 29' von als gesonderte Teile ausgeführten Ringsegmenten (gezeigt sind Ringelemente 29'a und 29'b) gebildet ist, die durch die Vernietung mit den Tangentialblattfedern 600' miteinander verbunden sind. Sind beispielsweise sechs Stützabschnitte 18' vorgesehen und die Tangentialblattfedern 600' zwischen Zwischenring 29' und Zwischenplatte 32' nur in jedem zweiten Winkelzwischenraum zwischen den Stützabschnitten 18' vorgesehen, so kann der Zwischenring 29' beispielsweise von drei sich jeweils über zwei Winkelzwischenräume erstreckenden Ringsegmenten in der Art der Segmente 29'a und 29'b gebildet sein, die durch die jeweilige Vernietung mit den Tangentialblattfedern 600' zu dem Zwischenring 29' verbunden sind.

Fig. 20 zeigt demgegenüber die Möglichkeit auf, dass gar kein durchgehender, ggf. mehrteiliger Zwischenring vorgesehen ist, sondern dass nur bogenförmige Zwischenstege 29' vorgesehen sind, die sich jeweils zwischen zwei Gehäusefüßen 21' erstrecken und die Vernietung mit den Tangentialblattfedern 600' für die Zwischenplatte 32' aufweisen. In jedem zweiten Winkelzwischenraum zwischen den Stützabschnitten 18' ist eine Lücke zwischen den Zwischenstegen 29' vorgesehen, wodurch Material und damit auch Gewicht bzw. Trägheitsmasse gespart wird. Gegenüber der Ausführungsmöglichkeit mit einem durchgehenden, einteiligen Zwischenring ist die Herstellung von einen mehrteiligen Zwischenring bildenden Ringsegmenten bzw. die Herstellung von bogenartigen, keinen Ring bzw. einen Ring mit Lücken bildenden Zwischenstegen kostengünstiger.

Wichtige Aspekte der Ausführungsvarianten der Fig. 11 bis 20 sind folgende: Es ist eine vormontierte Baueinheit bereitstellbar, die kein Schwungrad oder Zwei-Massen-Schwungrad aufweist. Die Einheit ist, ggf. nach Anbringung des Zwischenrings, transportabel und verliersicher montiert. Nur eine Kupplungsscheibe der Kupplungsscheibenanordnung mag demgegenüber gesondert vorgesehen, beispielsweise aufgelegt sein. Die Montagereihenfolge beim Automobilhersteller kann analog wie herkömmlich bei üblichen Einscheibenkupplungen sein. Es wird zuerst das Schwungrad oder Zwei-Massen-Schwungrad montiert und anschließend wird daran von der Ausrückerseite/Getriebeseite her eine Kupplungsscheibe und die vormontierte Einheit montiert, insbesondere festgeschraubt.

Es resultieren wesentliche Kosteneinsparungen; insbesondere auch hinsichtlich der Fertigung des Sekundärschwungrads eines Zwei-Massen-Schwungrads und der vorteilhaften Montierbarkeit von der Ausrückerseite her. Ferner ist ein größerer Teilkreisdurchmesser für die wirksamen Reibflächen möglich, insbesondere da die gegenüber dem Schwungrad gesonderten, vorzugsweise durch Umformen eines Blechteils gebildeten Stützabschnitte wenig radialen Bauraum benötigen.

Beim Ausführungsbeispiel der Fig. 1 bis 5 ist eine derartige Tangentialblattfederanbindung am Gehäuse der Zweischeibenkupplung realisiert, die bei Verwendung von Tangentialblattfedern gleicher Geometrie zwischen dem Schwungrad und der Zwischenplatte einerseits und zwischen der Zwischenplatte und der Anpressplatte andererseits gleiche Abhübe zwischen der Anpressplatte oder Zwischenplatte einerseits und zwischen der Zwischenplatte und dem Schwungrad andererseits gewährleisten kann. Dies liegt daran, dass beim Ausführungsbeispiel der Fig. 1 bis 5 die Tangentialblattfedern 600 einerseits und die Tangentialblattfedern 602 andererseits mit ihren jeweiligen Endabschnitten jeweils auf einer axialen Seite des Schwungrads bzw. der Zwischenplatte bzw. der Anpressplatte angebracht sind und dort mit dem betreffenden Endabschnitt aufliegen, der der jeweils anderen, über die betreffenden Tangentialblattfedern anzukoppelnden Komponenten zugewandt sind, so dass die Tangentialblattfedern an allen ihren Enden in gleicher Weise flächig abgestützt sind.

Bei den anderen Ausführungsbeispielen (vgl. vor allem Fig. 11 bis 16, aber auch Fig. 18 bis 20) ist demgegenüber die gehäuseseitige Anbindung der Tangentialblattfedern 600' gegenüber der der Zwischenplatte zugewandten axialen Seite des Schwungrads in Richtung zur Zwischenplatte axial verlagert, die die Zwischenplatte am Gehäuse ankoppelnden Tangentialblattfedern 600' liegen also nicht an der Schwungradseite bzw. Sekundärschwungradseite an, wohingegen diese Tangentialblattfedern 600' mit ihren anderen Enden auf der Zwischenplatte und die zwischen der Zwischenplatte und der Anpressplatte wirkenden Tangentialblattfedern mit ihren Enden jeweils auf der betreffenden Platte aufliegen. Dies kann zur Folge haben, dass nur sehr schwierig und unvollkommen gleiche Abhübe zwischen Anpressplatte und Zwischenplatte einerseits und zwischen Zwischenplatte und Schwungrad andererseits gewährleistet werden können. Man kann sich diesem Ziel annähern, indem für die Tangentialblattfedern zwischen Anpressplatte und Zwischenplatte einerseits und die Tangentialblattfedern zwischen Zwischenplatte und Gehäuse andererseits unterschiedliche Tangentialblattfedergeometrien verwendet werden, nämlich kürzere oder axial flachere Tangentialblattfedern zwischen Gehäuse und Zwischenplatte als zwischen Zwischenplatte und Anpressplatte. Gleiche Verhältnisse, d. h. gleiche Kraft-Weg-Kennlinien, für die Tangentialblattfedern zwischen Gehäuse und Zwischenplatte einerseits und für die Tangentialblattfedern zwischen Zwischenplatte und Anpressplatte andererseits lassen sich so kaum oder nur mit großem Aufwand erreichen.

Dies liegt - wie schon angedeutet - im Falle der Ausführungsform gemäß Fig. 11 bis 16 insbesondere daran, dass die Tangentialblattfedern zwischen der Anpressplatte und der Zwischenplatte an ihren Enden jeweils auf den Platten aufliegen, wohingegen die Tangentialblattfedern zwischen dem Gehäuse und der Zwischenplatte gehäuseseitig nicht auf dem Schwungrad (ggf. Sekundärschwungrad) aufliegen. Die Figuren zeigen, dass die Tangentialblattfedern jeweils zwei Knickstellen aufweisen, die gewissermaßen einen gehäuseseitigen oder plattenseitigen Vemietungs-Endabschnitt begrenzen. Die freie Biegelänge der Tangentialblattfedern entspricht im Wesentlichen dem Abstand zwischen den beiden Knicken der Tangentialblattfedern. Beim Ausführungsbeispiel der Fig. 11 bis 16 liegen die Tangentialblattfedern 600' nicht auf der der Zwischenplatte zugekehrten Axialseite des Schwungrads auf, sondern sind am Abschnitt 21'b-2 eines jeweiligen Gehäusefußes auf einer von der Zwischenplatte abgekehrten Seite festgenietet. Es fehlt hierdurch eine Abstützung des gehäuseseitigen Endabschnitts der Tangentialblattfedern 600' bis zur Knickstelle, so dass die Biegelänge der Tangentialblattfedern bis zum Nietkopf verlängert ist.

Aufgrund der resultierenden unterschiedlichen Biegelängen für die Tangentialblattfedern zwischen Zwischenplatte und Anpressplatte einerseits und die Tangentialblattfedern zwischen Zwischenplatte und Gehäuse andererseits ergeben sich unterschiedliche Steifigkeiten und Kraft-Weg-Kennlinien der Tangentialblattfederpakete. Die Folge ist, dass die Zwischenplatte bei der Kupplungsbetätigung nicht exakt zwischen der Anpressplatte und dem Schwungrad zentriert ist. Insbesondere kann ein unerwünschter zusätzlicher Abhub der Anpressplatte erforderlich sein, um dies zu kompensieren.

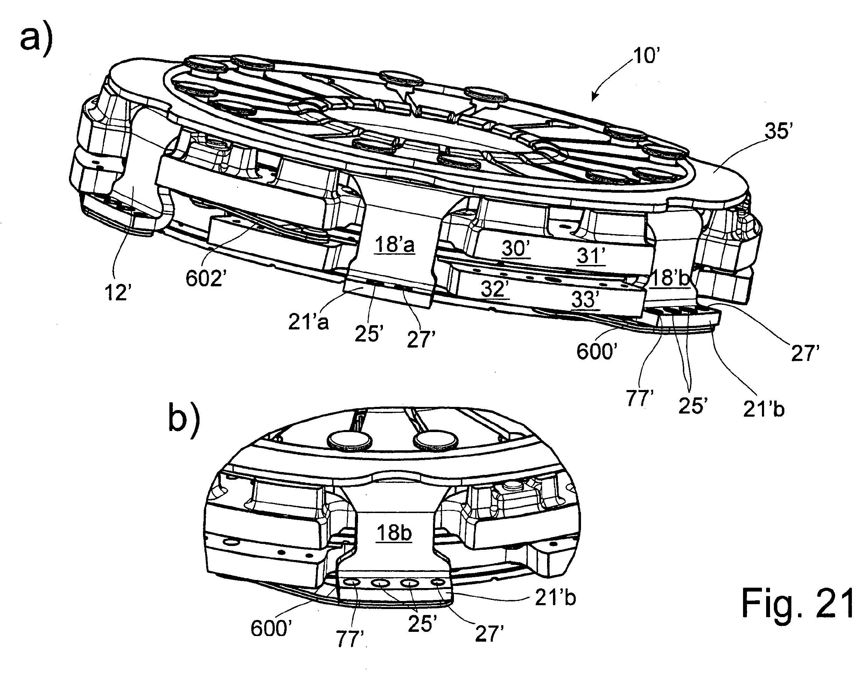

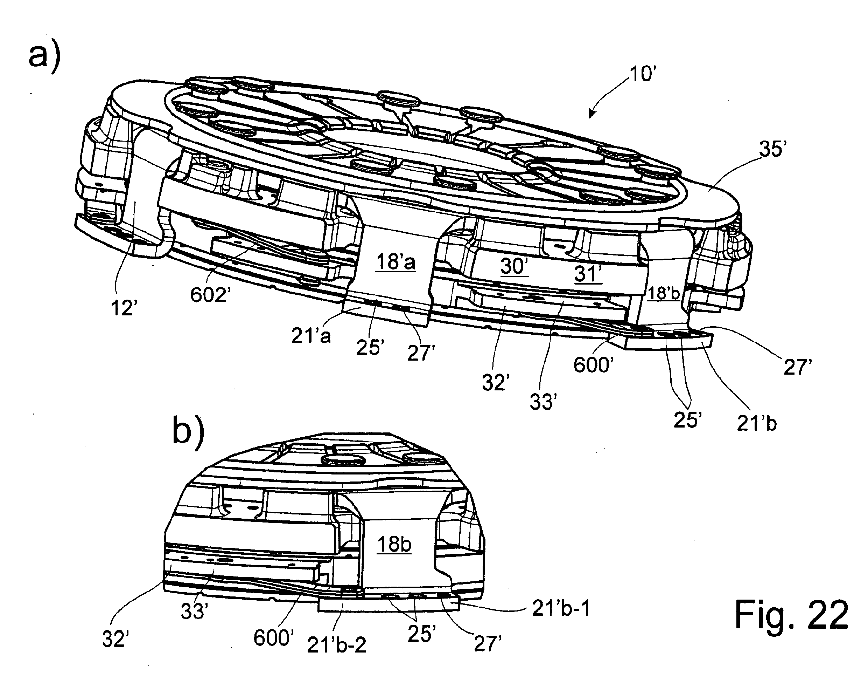

Die Ausführungsbeispiele der Fig. 21 und 22 zeichnen sich demgegenüber dadurch aus, dass durch einfache bauliche Maßnahmen gleiche Abhübe zwischen Anpress- und Zwischenplatte einerseits und zwischen Zwischenplatte und Schwungrad (bzw. Sekundärschwungrad) andererseits (zum Schwungrad vgl. Fig. 17) gewährleistet werden können, auf Grundlage einer Verwendung von Tangentialblattfedern gleicher Geometrie zwischen Gehäuse und Zwischenplatte einerseits und zwischen Zwischenplatte und Anpressplatte andererseits.

Gemäß Fig. 21 sind die Stützabschnitte 18'b, an deren Gehäusefüße 21'b die Tangentialblattfedern 600' angebracht sind, um die Dicke der Tangentialblattfederpakete axial kürzer als die Stützabschnitte 18'a, an deren Gehäusefüßen 21'a keine Tangentialblattfedern angebracht sind. Die Tangentialblattfederpakete 600' weisen verlängerte gehäuseseitige Endabschnitte auf, und sind mit diesen verlängerten Endbereichen zwischen den Gehäusefüßen 21'b und dem nicht dargestellten Schwungrad angeordnet, und dienen dabei gewissermaßen als Unterlagblech für die Gehäusefüße 21'b, das die axiale Längendifferenz zwischen den Stützabschnitten 18'b einerseits und den Stützabschnitten 18'a andererseits ausgleicht. Die Füße 21'b können beispielsweise vier Bohrungen aufweisen, von denen beispielsweise die in Umfangsrichtung mittleren Bohrungen 25' der Verschraubung mit dem Schwungrad durch entsprechende Öffnungen des Federendabschnitts dienen, eine weitere Bohrung 27' der Zentrierung mittels eines sich durch eine entsprechende Öffnung des Federabschnitts erstreckenden Passstifts dient und die verbleibende Bohrung 77' zur Befestigung des Tangentialblattfederpakets, insbesondere zur Vernietung des Tangentialblattederpakets mit dem Gehäusefuß 21'b, dient. Im Schwungrad kann eine Bohrung oder Absenkung vorgesehen sein, in die Teile des für die Anbringung der Tangentialblattfedern verwendeten Befestigungselements, also beispielsweise ein Nietabschnitt, eintauchen kann.

Demgegenüber weisen beim Ausführungsbeispiel der Fig. 22 die Abstützabschnitte 18'a, deren Gehäusefüße 21'a keine Tangentialblattfedern angebracht sind, und die Abstützabschnitte 18'b, an deren Gehäusefüße 21'b Tangentialblattffedern 600' angebracht sind, die gleiche axiale Länge auf. Trotzdem können für die zwischen dem Gehäuse und der Zwischenplatte 32' wirksamen Tangentialblattfedern 600' einerseits und für die zwischen der Zwischenplatte und der Anpressplatte wirksamen Tangentialblattfedern 600" andererseits ebenso wie beim Ausführungsbeispiel der Fig. 21 identische Tangentialblattederpakete 600' bzw. 600" verwendet werden. Dies wird dadurch erreicht, dass die Plattenabschnitte 33' der Zwischenplatte 32' gegenüber der axialen Dicke der Zwischenplatte dünner ausgeführt sind, wobei die dem Schwungrad zugewandte Befestigungsfläche, an der die Tangentialblattederpakete 600' anliegen, um eine Axialstrecke von der schwungradseitigen Reibfläche der Zwischenplatte in Richtung zur Anpressplatte versetzt ist, die der axialen Dicke der Gehäusefüße 21'b entspricht. Die Tangentialblattfedern 600' sind auf der vom Schwungrad abgewandten, der Zwischenplatte 32' zugewandten Seite der Gehäusefüße 21'b angebunden, vorzugsweise daran festgenietet. Die Füße 21'b sind dabei so gestaltet, dass sie die Tangentialblattederpakete 600' bis zu ihrer gehäuseseitigen Knickstelle unterstützen, so dass für die Tangentialblattfedern zwischen Zwischenplatte und Gehäuse einerseits und die Tangentialblattfedern zwischen Zwischenplatte und Anpressplatte andererseits an ihren Anbindungsenden jeweils die gleichen Abstützverhältnisse vorliegen.

Die Gehäusefüße 21'b können beispielsweise vier Bohrungen aufweisen, von denen etwa die beiden mittleren Bohrungen 25' der Verschraubung mit dem Schwungrad dienen, eine weitere Bohrung 27' der Zentrierung am Schwungrad mittels eines Passstifts dient und die verbleibende Bohrung der Befestigung des jeweiligen Tangentialblattfederpakets, also insbesondere der Vernietung, dient. Im Schwungrad können Bohrungen oder Absenkungen vorgesehen sein, in die Abschnitte des jeweiligen Befestigungselements (insbesondere Niets), eintauchen können. Zu der Form der Gehäusefüße 21'b ist darauf hinzuweisen, dass diese gegenüber den Gehäusefüßen 21'a in Umfangsrichtung verlängert sind, nämlich einen in Umfangsrichtung vorstehenden Abschnitt 21'b-2 aufweisen, an dem das jeweilige Tangentialblattfederpaket 600' angebracht ist. Der im Umfangswinkelbereich der Abstützabschnitte 18'b liegende Fußabschnitt 21'b-1 weist demgegenüber die der Befestigung und Zentrierung dienenden Bohrungen 25' und 27' auf.

Die Ausführungsbeispiele der Fig. 21 und 22 weisen unter anderem die folgenden Vorteile auf. Die Zwischenplatte wird axial besser zentriert, da die Tangentialblattfedern alle die gleiche freie Biegelänge besitzen und insbesondere die gleichen Kennlinien aufweisen. Aufgrund der Verschraubung der Füße 21'b mit jeweils zwei Schrauben am Schwungrad und aufgrund der Symmetrie der Verschraubung sind Spannungen im Gehäusefuß minimiert. Aufgrund der Verschraubung mittels zwei Schrauben sind kleinere Schrauben möglich, was radialen Bauraum und Gewicht spart und bei gleichem radialen Bauraum die Übertragung höherer Momente ermöglicht.

Es ist darauf hinzuweisen, dass auch schon beiden Ausführungsformen der Fig. 18 bis 20 die radial vorstehenden Plattenabschnitte 33' gegenüber der axialen Dicke der Zwischenplatte 32' dünner und mit ihrer schwungradseitigen Befestigungsfläche in Richtung zur Anpressplatte 30' versetzt sind. Entspricht dieser Versatz der axialen Dicke des Zwischenrings 29' bzw. der Segmente 29', so ist eine Situation ähnlich wie beim Ausführungsbeispiel der Fig. 22 erreicht, und es sind auf Grundlage identischer Tangentialblattfedern zwischen Gehäuse und Zwischenplatte einerseits und zwischen Zwischenplatte und Anpressplatte andererseits gleiche freie Biegelängen und gleiche Kraft-Weg-Kennlinien für die Tangentialblattfedern möglich. Die Ausführungsbeispiele der Fig. 18 und 20 sowie das Ausführungsbeispiel der Fig. 5 sind insoweit ebenso wie die Ausführungsbeispiele der Fig. 21 und 22 Ausführungsbeispiele dafür, dass auf Grundlage identische Tangentialblattfedern und einer einfachen baulichen Struktur sowohl für die Halterung und Führung der Zwischenplatte am Gehäuse als auch für die Halterung und Führung der Anpressplatte an der Zwischenplatte vermittels der Tangentialblattfedern gleiche wirksame Federsteifigkeiten und Kraft-Weg-Kennlinien erzielbar sind.

## Patentansprüche

1. Kupplungsscheibenanordnung für eine als Mehrscheibenkupplung ausgeführte Reibungskupplung, umfassend:
- wenigstens zwei Reibbelageinheiten (1012, 1014; 1012', 1014');
- ein mit einer Welle drehfest verbindbares oder verbundenes Nabenelement (1016; 1016');
- eine Trägeranordnung (1020, 1048), mit welcher die Reibbelageinheiten (1012, 1014; 1012', 1014') im Wesentlichen drehfest verbunden sind und über welche die Reibbelageinheiten (1012, 1914; 1012', 1014') mit dem Nabenelement (1016; 1016') verbunden oder verbindbar sind;
- eine Torsionsschwingungsdämpferanordnung (1106; 1106'), die ein mit dem Nabenelement (1016) fest verbundenes oder mit diesem einteiliges zentrales Scheibenelement (1090) und auf beiden axialen Seiten des zentralen Scheibenelements (1090) jeweils ein zumindest beschränkt relativ zum Nabenelement (1016) verdrehbares Deckscheibenelement (1092, 1094) und eine zwischen dem zentralen Scheibenelement (1090) und den Deckscheibenelementen (1092, 1094) wirkende Dämpfungs- oder/und Federelementanordnung (1102) aufweist;
wobei die Trägeranordnung (1020, 1048) umfasst:
- ein über die Torsionsschwingungsdämpferanordnung (1106; 1106') mit dem Nabenelement (1016; 1016') verbundenes oder verbindbares, mit einem (1092) der Deckscheibenelemente (1092, 1094) fest verbundenes oder mit diesem einteiliges erstes Trägerelement (1020), mit welchem eine (1012) der Reibbelageinheiten (1012, 1014) fest verbunden ist, und
- ein über die Torsionsschwingungsdämpferanordnung (1106; 1106') mit dem Nabenelement (1016; 1016') verbundenes oder verbindbares zweites Trägerelement (1048), mit welchem eine weitere der Reibbelageinheiten (1012, 1014; 1012', 1014') fest verbunden ist und welches mit dem ersten Trägerelement (1020) zur gemeinsamen Drehung und bezüglich diesem im Wesentlichen in Richtung einer Drehachse (A) verlagerbar verbunden oder verbindbar ist;
**dadurch gekennzeichnet, dass** das zweite Trägerelement (1048) über die Torsionsschwingungsdämpferanordnung (1106; 1106') mit dem ersten Trägerelement (1020) verbunden oder verbindbar ist.

2. Kupplungsscheibenanordnung nach Anspruch 1, **dadurch gekennzeichnet, dass** das zweite Trägerelement (1048) mit dem anderen (1094) der Deckscheibenelemente (1092, 1094) drehfest und bezüglich diesem im Wesentlichen in Richtung der Drehachse (A) verlagerbar verbunden oder verbindbar ist.

3. Kupplungsscheibenanordnung nach Anspruch 2, **dadurch gekennzeichnet, dass** vom zweiten Trägerelement (1048) und dem anderen Deckscheibenelement (1094) oder einem damit fest verbundenen Zwischenträgerelement ein Element (1094) eine im Wesentlichen nach radial außen gerichtete erste Eingriffsformation (1046), vorzugsweise Außenverzahnung (1046), und das andere Element (1048) eine im Wesentlichen nach radial innen gerichtete zweite Eingriffsformation (1054), vorzugsweise Innenverzahnung (1054) aufweist, welche mit der ersten Eingriffsformation (1046) in Drehmitnahmeeingriff steht oder bringbar ist.

4. Kupplungsscheibenanordnung nach Anspruch 3, **dadurch gekennzeichnet, dass** von der Außenverzahnung (1046) und der Innenverzahnung (1054) zumindest eine in Richtung der Drehachse (A) langgestreckt ist.

5. Kupplungsscheibenanordnung nach Anspruch 3 oder 4, **dadurch gekennzeichnet, dass** vom zweiten Trägerelement (1048) und dem anderen Deckscheibenelement (1094) oder dem damit fest verbundenen Zwischenträgerelement wenigstens ein Element (1094) im Wesentlichen topfartig ausgebildet ist, wobei ein Umfangswandungsbereich dieses Elements die erste bzw. zweite Eingriffsformation (1046, 1054) aufweist.

6. Kupplungsscheibenanordnung nach Anspruch 5, **dadurch gekennzeichnet, dass** das zweite Trägerelement (1048) von einem im Wesentlichen planen Ringscheibenteil gebildet ist.

## Claims

1. Clutch disc arrangement for a friction clutch in the form of a multidisc clutch, comprising:
- at least two friction lining units (1012, 1014; 1012', 1014');
- a hub element (1016; 1016') which can be or is connected rotationally conjointly to a shaft;
- a carrier arrangement (1020, 1048) to which the friction lining units (1012, 1014; 1012', 1014') are connected in a substantially rotationally conjoint manner and via which the friction lining units (1012, 1014; 1012', 1014') are or can be connected to the hub element (1016; 1016');
- a torsional vibration damper arrangement (1106; 1106'), the latter having a central disc element (1090) which is fixedly connected to, or in one piece with, the hub element (1016) and having, on both axial sides of the central disc element (1090), in each case one cover disc element (1092, 1094), which is rotatable at least to a limited extent relative to the hub element (1016), and one damping and/or spring element arrangement (1102) that acts between the central disc element (1090) and the cover disc elements (1092, 1094);
wherein the carrier arrangement (1020, 1048) comprises:
- a first carrier element (1020) which is or can be connected via the torsional vibration damper arrangement (1106; 1106') to the hub element (1016; 1016') and which is fixedly connected to, or in one piece with, one (1092) of the cover disc elements (1092, 1094) and to which one (1012) of the friction lining units (1012, 1014) is fixedly connected, and
- a second carrier element (1048) which is or can be connected via the torsional vibration damper arrangement (1106; 1106') to the hub element (1016; 1016') and to which a further one of the friction lining units (1012, 1014; 1012', 1014') is fixedly connected and which is or can be connected to the first carrier element (1020) for common rotation and so as to be displaceable relative thereto substantially in the direction of an axis of rotation (A);
**characterized in that** the second carrier element (1048) is or can be connected via the torsional vibration damper arrangement (1106; 1106') to the first carrier element (1020).

2. Clutch disc arrangement according to Claim 1, **characterized in that** the second carrier element (1048) is or can be connected to the other (1094) of the cover disc elements (1092, 1094) in a rotationally conjoint manner and so as to be displaceable relative thereto substantially in the direction of the axis of rotation (A).

3. Clutch disc arrangement according to Claim 2, **characterized in that**, of the second carrier element (1048) and the other cover disc element (1094) or an intermediate carrier element fixedly connected thereto, one element (1094) has a substantially radially outwardly directed first engagement formation (1046), preferably external toothing (1046), and the other element (1048) has a substantially radially inwardly directed second engagement formation (1054), preferably internal toothing (1054), which is in rotationally driving engagement, or can be placed in rotationally driving engagement, with the first engagement formation (1046).

4. Clutch disc arrangement according to Claim 3, **characterized in that**, of the external toothing (1046) and the internal toothing (1054), at least one is of elongate form in the direction of the axis of rotation (A).

5. Clutch disc arrangement according to Claim 3 or 4, **characterized in that**, of the second carrier element (1048) and the other cover disc element (1094) or the intermediate carrier element fixedly connected thereto, at least one element (1094) is of substantially pot-shaped form, wherein a circumferential wall region of said element has the first or second engagement formation (1046, 1054) respectively.

6. Clutch disc arrangement according to Claim 5, **characterized in that** the second carrier element (1048) is formed by a substantially planar annular disc part.

## Revendications

1. Ensemble de disques d'embrayage pour un embrayage à friction réalisé sous forme d'embrayage à disques multiples, comprenant :
- au moins deux unités de garniture de friction (1012, 1014 ; 1012', 1014') ;
- un élément de moyeu (1016 ; 1016') connecté ou pouvant être connecté de manière solidaire en rotation à un arbre ;
- un agencement de support (1020, 1048), avec lequel les unités de garniture de friction (1012, 1014 ; 1012', 1014') sont essentiellement connectées de manière solidaire en rotation, et par le biais duquel les unités de garniture de friction (1012, 1014 ; 1012', 1014') sont connectées ou peuvent être connectées à l'élément de moyeu (1016 ; 1016') ;
- un agencement d'amortisseur d'oscillations de torsion (1106 ; 1106') qui présente un élément de disque central (1090) connecté fixement à l'élément de moyeu (1016) ou réalisé d'une seule pièce avec celui-ci et, sur les deux côtés axiaux de l'élément de disque central (1090), à chaque fois un élément de disque de recouvrement (1092, 1094) pouvant tourner au moins de manière limitée par rapport à l'élément de moyeu (1016) et un agencement d'élément d'amortissement et/ou d'élément de ressort (1102) agissant entre l'élément de disque central (1090) et les éléments de disque de recouvrement (1092, 1094) ;
l'agencement de support (1020, 1048) comprenant :
- un premier élément de support (1020) connecté ou pouvant être connecté à l'élément de moyeu (1016 ; 1016') par le biais de l'agencement d'amortisseur d'oscillations de torsion (1106 ; 1106'), connecté fixement à l'un (1092) des éléments de disque de recouvrement (1092, 1094) ou réalisé d'une seule pièce avec celui-ci, avec lequel élément de support est connectée fixement l'une (1012) des unités de garniture de friction (1012, 1014), et
- un deuxième élément de support (1048) connecté ou pouvant être connecté à l'élément de moyeu (1016 ; 1016') par le biais de l'agencement d'amortisseur d'oscillations de torsion (1106 ; 1106'), avec lequel est connectée fixement une autre des unités de garniture de friction (1012, 1014 ; 1012', 1014') et lequel est connecté ou peut être connecté au premier élément de support (1020) en vue d'une rotation commune et, par rapport à celui-ci, de manière déplaçable essentiellement dans la direction d'un axe de rotation (A) ;
**caractérisé en ce que** le deuxième élément de support (1048) est connecté ou peut être connecté par le biais de l'agencement d'amortisseur d'oscillations de torsion (1106 ; 1106') au premier élément de support (1020).

2. Ensemble de disques d'embrayage selon la revendication 1, **caractérisé en ce que** le deuxième élément de support (1048) est connecté ou peut être connecté de manière solidaire en rotation à l'autre (1094) des éléments de disque de recouvrement (1092, 1094) et, par rapport à celui-ci, de manière déplaçable essentiellement dans la direction de l'axe de rotation (A).

3. Ensemble de disques d'embrayage selon la revendication 2, **caractérisé en ce que** parmi le deuxième élément de support (1048) et l'autre élément de disque de recouvrement (1094) ou un élément de support intermédiaire connecté fixement à celui-ci, un élément (1094) présente une première formation d'engagement (1046) orientée essentiellement radialement vers l'extérieur, de préférence une denture extérieure (1046), et l'autre élément (1048) présente une deuxième formation d'engagement (1054) orientée essentiellement radialement vers l'intérieur, de préférence une denture intérieure (1054), laquelle est ou peut être amenée en prise d'entraînement en rotation avec la première formation d'engagement (1046).

4. Ensemble de disques d'embrayage selon la revendication 3, **caractérisé en ce que** parmi la denture extérieure (1046) et la denture intérieure (1054), au moins l'une est orientée longitudinalement dans la direction de l'axe de rotation (A).

5. Ensemble de disques d'embrayage selon la revendication 3 ou 4, **caractérisé en ce que** parmi le deuxième élément de support (1048) et l'autre élément de disque de recouvrement (1094) ou l'élément de support intermédiaire connecté fixement à celui-ci, au moins un élément (1094) est réalisé essentiellement en forme de pot, une région de paroi périphérique de cet élément présentant la première ou la deuxième formation d'engagement (1046, 1054).

6. Ensemble de disques d'embrayage selon la revendication 5, **caractérisé en ce que** le deuxième élément de support (1048) est formé par une partie de disque annulaire essentiellement plane.
